# EUROPEAN PATENT APPLICATION

(11) **EP 3 779 778 A1**
(43) Date of publication of application: **17.02.2021**
(21) Application number: 20179902.0
(22) Date of filing: 15.06.2020
(51) Int. Cl.: G06K 9/00, G06N 3/04, G06N 3/063, G06F 9/48, G06F 9/50, H04L 29/08

(54) **METHODS AND APPARATUS TO ENABLE DYNAMIC PROCESSING OF A PREDEFINED WORKLOAD**

(30) Priority: 15.08.2019 US 201916542039
(71) Applicant: INTEL Corporation, Santa Clara, CA 95054 (US)
(72) Inventor: Behar, Michael, 30900 Zichron Yaakov (IL); Agam, Oren, 30900 Zichron Yaacov (IL); Gabbai, Ronen, 1923800 Ramat Hashofet (IL); Walter, Zigi, 2627335 Haifa (IL); Rosner, Roni, 3056922 Binyamina (IL); Maor, Moshe, 26360 Kiryat Mozking (IL)
(74) Representative: Goddar, Heinz J.

(57) **Abstract**

Methods, apparatus, systems and articles of manufacture are disclosed that enable dynamic processing of a predefined workload to one or more computational building blocks of an accelerator. An example apparatus includes an interface to obtain a workload node, the workload node associated with a first amount of data, the workload node to be executed at a first one of the one or more computational building blocks; an analyzer to: determine whether the workload node is a candidate for early termination; and in response to determining that the workload node is a candidate for early termination, set a flag associated with a tile of the first amount of data; and a dispatcher to, in response to the tile being transmitted from the first one of the one or more computational building blocks to a buffer, stop execution of the workload node.

## Description

### FIELD OF THE DISCLOSURE

This disclosure relates generally to processing of workloads, and, more particularly, to methods and apparatus to enable dynamic processing of a predefined workload.

### BACKGROUND

Computer hardware manufacturers develop hardware components for use in various components of a computer platform. For example, computer hardware manufacturers develop motherboards, chipsets for motherboards, central processing units (CPUs), hard disk drives (HDDs), solid state drives (SSDs), and other computer components. Additionally, computer hardware manufacturers develop processing elements, known as accelerators, to accelerate the processing of a workload. For example, an accelerator can be a CPU, a graphics processing units (GPU), a vision processing units (VPU), and/or a field programmable gate arrays (FPGA).

### BRIEF DESCRIPTION OF THE DRAWINGS

FIG. 1 is a graphical illustration of a graph representative of a workload executing on an accelerator of a heterogenous system.
FIG. 2 is a block diagram illustrating an example computing system constructed in accordance with teaching of this disclosure.
FIG. 3 is a block diagram illustrating an example computing system including example one or more schedulers, a credit manager, and a controller.
FIG. 4 is a block diagram of an example scheduler that can implement one or more of the schedulers of FIGS. 2, 3, and 7.
FIG. 5 is a block diagram of an example credit manager that can implement at least one of the one or more controllers of FIG. 2 and/or the credit manager of FIGS. 3 and 7.
FIG. 6 is a block diagram of an example controller that can implement at least one of the controllers of FIG. 2 and/or the controller of FIGS. 3 and 7.
FIG. 7 is a graphical illustration of an example graph representing a workload executing on an accelerator of a heterogenous system implementing pipelining and buffers.
FIG. 8 is a flowchart representative of a process which can be implemented by machine readable instructions which may be executed to implement the scheduler of FIG. 4.
FIG. 9 is a flowchart representative of a process which can be implemented by machine readable instructions which may be executed to implement the credit manager of FIG. 5.
FIG. 10 is a flowchart representative of a process which can be implemented by machine readable instructions which may be executed to implement the controller of FIG. 6.
FIG. 11 is a block diagram of an example processor platform structured to execute the instructions of FIGS. 8, 9, and 10 to implement one or more instantiations of the scheduler of FIG. 4, the credit manager of FIG. 5, and/or the controller of FIG. 6.

The figures are not to scale. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Many computer hardware manufacturers develop processing elements, known as accelerators, to accelerate the processing of a workload. For example, an accelerator can be a central processing unit (CPU), a graphics processing unit (GPU), a vision processing unit (VPU), and/or a field programmable gate array (FPGA). Moreover, accelerators, while capable of processing any type of workload, are designed to optimize particular types of workloads. For example, while CPUs and FPGAs can be designed to handle more general processing, GPUs can be designed to improve the processing of video, games, and/or other physics and mathematically based calculations, and VPUs can be designed to improve the processing of machine vision tasks.

Additionally, some accelerators are designed specifically to improve the processing of artificial intelligence (AI) applications. While a VPU is a specific type of AI accelerator, many different AI accelerators can be used. In fact, many AI accelerators can be implemented by application specific integrated circuits (ASICs). Such ASIC-based AI accelerators can be designed to improve the processing of tasks related to a particular type of AI, such as machine learning (ML), deep learning (DL), and/or other artificial machine-driven logic including support vector machines (SVMs), neural networks (NNs), recurrent neural networks (RNNs), convolutional neural networks (CNNs), long short term memory (LSTM), gate recurrent units (GRUs), mask region based CNNs (masked R-CNNs), etc.

Computer hardware manufactures also develop heterogeneous systems that include more than one type of processing element. For example, computer hardware manufactures may combine both general purpose processing elements, such as CPUs, with either general purpose accelerators, such as FPGAs, and/or more tailored accelerators, such as GPUs, VPUs, and/or other AI accelerators. Such heterogeneous systems can be implemented as systems on a chip (SoCs).

When a developer desires to run a function, algorithm, program, application, and/or other code on a heterogeneous system, the developer and/or software generates a schedule for the function, algorithm, program, application, and/or other code at compile time. Once a schedule is generated, the schedule is combined with the function, algorithm, program, application, and/or other code to generate an executable file (either for Ahead of Time or Just in Time paradigms). Moreover, a function, algorithm, program, application, and/or other code may be represented as a graph including nodes, where the graph represents a workload and each node represents a particular task of that workload. Furthermore, the connections between the different nodes in the graph represent the data inputs and/or outputs needed to in order for a particular node to be executed and the vertices of the graph represent data dependencies between nodes of the graph.

The executable file includes a number of different executable sections, where each executable section is executable by a specific processing element (e.g., a CPU, a GPU, a VPU, and/or an FPGA). Each executable section of the executable file may further include executable sub-sections, where each executable sub-section is executable by computational building blocks (CBBs) of the specific processing element. Additionally, a function that defines success for the execution (e.g., a function designating successful execution of the function, algorithm, program, application, and/or other code on the heterogeneous system and/or specific processing element). For example, such a success function may correspond to executing the function, algorithm, program, application, and/or other code to meet and/or otherwise satisfy a threshold of utilization of the heterogeneous system and/or specific processing element. In other examples, a success function may correspond to executing the function in a threshold amount of time. However, any suitable success function may be utilized when determining how to execute the function, algorithm, program, application, and/or other code on a heterogeneous system and/or specific processing element.

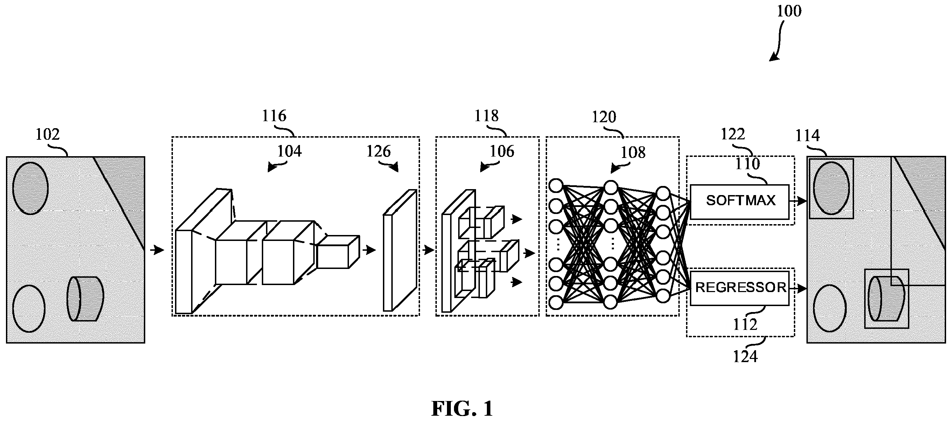

FIG. 1 is a graphical illustration of a graph 100 representative of a workload executing on an accelerator of a heterogenous system. The workload is, for example, an image processing workload to be processed by a mask R-CNN. The graph 100 includes an input 102, a first workload node 104, a second workload node 106, a third workload node 108, a fourth workload node 110, a fifth workload node 112, and an output 114. In FIG. 1, the accelerator is running the workload represented by the graph 100 via a static software schedule. Static software scheduling includes determining a pre-defined manner in which to execute the different workload nodes of the graph 100 on computational building blocks (CBBs) of an accelerator. For example, the static software schedule assigns the first workload node 104 to a first CBB 116, the second workload node 106 to a second CBB 118, the third workload node 108 to a third CBB 120, the fourth workload node 110 to a fourth CBB 122, and the fifth workload node 112 to a fifth CBB 124.

In FIG. 1, the input 102 is an image to be processed by the accelerator (e.g., a VPU, another AI accelerator, etc.). The first workload node 104 is a layer of the mask R-CNN that, when executed, identifies one or more features in the input 102 (e.g., the image) by convolving the image with one or more matrices indicative of features in the image, such as edges, gradients, color, etc. The first workload node 104, when executed, can generated any number of features with an upper threshold of, for example, 1000 features. As such, the first CBB 116 can be implemented by a convolution engine. The identified features can be output as a feature map 126 by the first CBB 116.

In FIG. 1, the second workload node 106 is a layer of the mask R-CNN that, when executed, pools regions of interest (ROI). The second workload node 106, when executed, can generate one or more candidate regions where an object can possibly be located in the image (e.g., the input 102). For examples, based on the 1000 features generated by the first workload node 104, the second workload node 106 can generate 750 candidate regions. The ROI pooling layer (e.g., the second workload node 106), when executed, scales a section of the feature map 126 associated with each of the candidate regions to a predetermined size. The second workload node 106, when executed, generates scaled candidate regions with a fixed size that can improve the processing speed of later layers in the mask R-CNN by allowing the use of the same feature map 126 for each of the candidate regions. The output of the second CBB 118 is a flattened matrix including a dimension of *N*x1 where N is equal to the number of scaled candidate regions (e.g., 1000). As such, the second CBB 118 can be implemented by a digital signal processor (DSP).

In FIG. 1, the third workload node 108 is one or more fully connected layers of the mask R-CNN that, when executed, identifies features in the flattened matrix generated by the second CBB 118 that most correlate to a particular class (e.g., an object). Each neuron in the one or more fully connected layers is connected to every neuron in the preceding layer of the one or more fully connected layers and the next layer of the one or more fully connected layers. Additionally, each neuron in the fully connected layer (e.g., the third workload node 108) generates a value based on weights learned during a training phase of the mask R-CNN. The third workload node 108 is configured to receive and process a flattened matrix of a size equivalent to the upper threshold of features (e.g., 1000). As such, the third CBB 120 can be implemented by a DSP.

In FIG. 1, the fourth workload node 110 is a layer of the mask R-CNN that, when executed, implements a SoftMax function to convert the output of the one or more fully connected layers (e.g., the third workload node 108) to probabilities. As such, the fourth CBB 122 can be implemented by a DSP. The fifth workload node 112 is a layer of the mask R-CNN that, when executed, implements a regression function to identify a best fit for the output of the one or more fully connected layers (e.g., the third workload node 108). For example, the regression function can implement cost functions, gradient descent, or other suitable regression functions. As such, the fifth CBB 124 can be implemented by a DSP. As a result of the first workload node 104, the second workload node 106, the third workload node 108, the fourth workload node 110, and the fifth workload node 112, the output 114 indicates objects in the input 102 image.

While the graph 100 facilitates object identification, in some examples, a portion of the candidate regions can be less useful than others (e.g., candidate regions associated with the background vs. candidate regions associated with objects). However, typical implementations of CBBs executing the graph 100 will process all of the candidate regions. Processing of all the candidate regions results in extensive processing time and increased computational resource expenditure (e.g., increased power consumption, increased processing cycles, etc.).

Examples disclosed herein include methods and apparatus to enable dynamic processing of a predefined workload. As opposed to typical processing of workloads, the examples disclosed herein do not rely execution of a predefined amount of data in order to complete the execution of a workload. Rather, the examples disclosed herein analyze the data dependencies of a workload node and determine whether a workload node is a candidate for early termination to allow for the dynamic processing of a predefined amount of data. Moreover, in examples disclosed herein, an accelerator can execute an offloaded workload including a predefined data size dynamically by generating a composite result of each of the workload nodes of the workload prior to the completion of the entirety of the workload, when early termination is possible. This allows a dynamic processing of a predefined workload and reduces latencies and power consumption associated with processing the predefined workload.

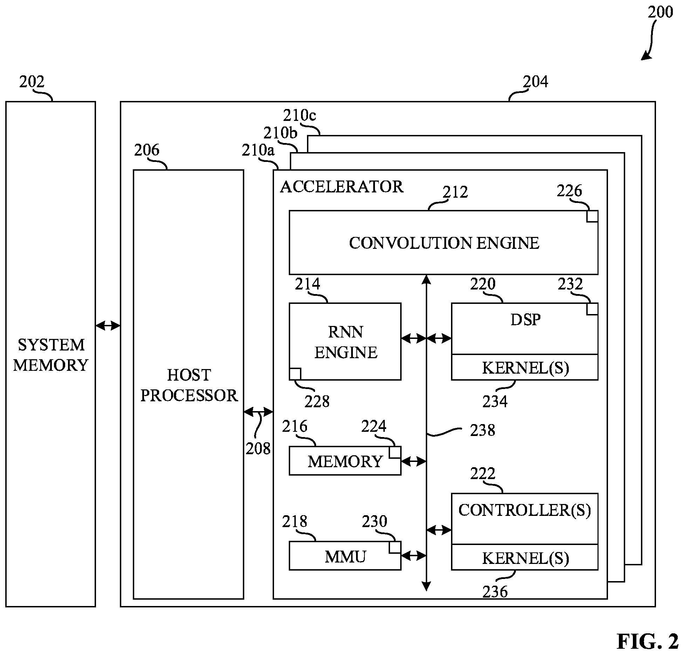

FIG. 2 is a block diagram illustrating an example computing system 200 constructed in accordance with teaching of this disclosure. In the example of FIG. 2, the computing system 200 includes an example system memory 202 and an example heterogeneous system 204. The example heterogeneous system 204 includes an example host processor 206, an example first communication bus 208, an example first accelerator 210a, an example second accelerator 210b, and an example third accelerator 210c. Each of the example first accelerator 210a, the example second accelerator 210b, and the example third accelerator 210c includes a variety of CBBs some generic to the operation of an accelerator and some specific to the operation of the respective accelerators.

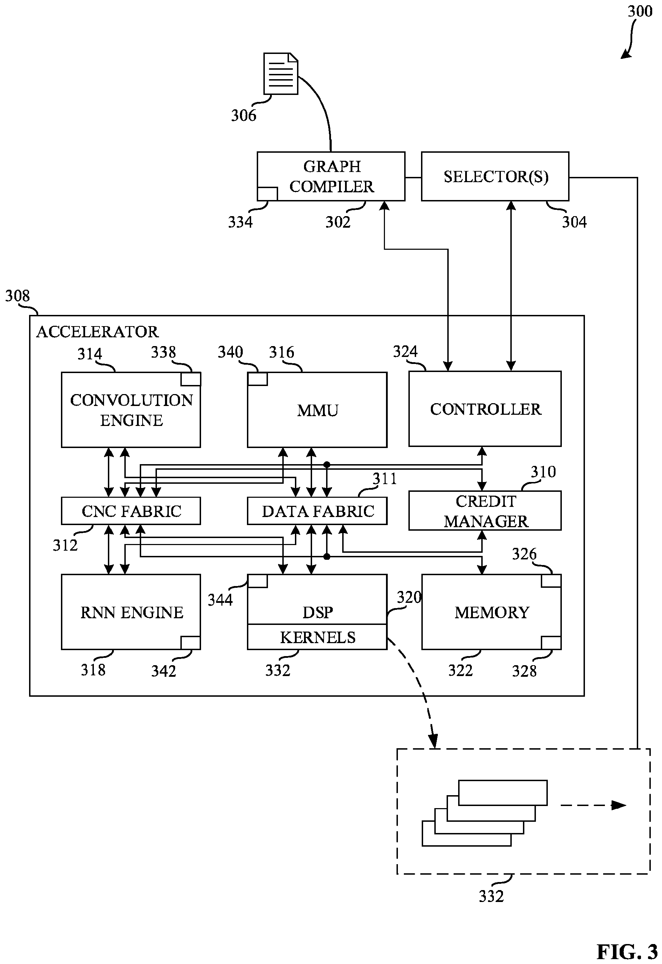

In the example of FIG. 2, the system memory 202 is coupled to the heterogeneous system 204. The system memory 202 is a memory. In FIG. 2, the system memory 202 is a shared storage between at least one of the host processor 206, the first accelerator 210a, the second accelerator 210b, and the third accelerator 210c. In the example of FIG. 3, the system memory 202 is a physical storage local to the computing system 200. However, in other examples, the system memory 202 may be external to and/or otherwise be remote with respect to the computing system 200. In further examples, the system memory 202 may be a virtual storage. In the example of FIG. 2, the system memory 202 is a persistent storage (e.g., read only memory (ROM), programmable ROM (PROM), erasable PROM (EPROM), electrically erasable PROM (EEPROM), etc.). In other examples, the system memory 202 may be a flash storage. In further examples, the system memory 202 may be a volatile memory.

In FIG. 2, the heterogeneous system 204 is coupled to the system memory 202. In the example of FIG. 2, the heterogeneous system 204 processes a workload by executing the workload on the host processor 206 and/or one or more of the first accelerator 210a, the second accelerator 210b, or the third accelerator 210c. In FIG. 2, the heterogeneous system 204 is an SoC. Alternatively, the heterogeneous system 204 may be any other type of computing or hardware system.

In the example of FIG. 2, the host processor 206 is a processing element that executes instructions (e.g., machine-readable instructions) to execute, perform, and/or facilitate a completion of operations associated with a computer or computing device (e.g., the computing system 200). In the example of FIG. 2, the host processor 206 is a primary processing element for the heterogeneous system 204 and includes at least one core. Alternatively, the host processor 206 may be a co-primary processing element (e.g., in an example where more than one CPU is utilized) while, in other examples, the host processor 206 may be a secondary processing element.

In the illustrated example of FIG. 2, one or more of the first accelerator 210a, the second accelerator 210b, and/or the third accelerator 210c are processing elements that may be utilized by a program executing on the heterogeneous system 204 for computing tasks, such as hardware acceleration. For example, the first accelerator 210a is a processing element that includes processing resources that are designed and/or otherwise configured or structured to improve the processing speed and overall performance of processing machine vision tasks for AI (e.g., a VPU).

In examples disclosed herein, each of the host processor 206, the first accelerator 210a, the second accelerator 210b, and the third accelerator 210c is in communication with the other elements of the computing system 200 and/or the system memory 202. For example, the host processor 206, the first accelerator 210a, the second accelerator 210b, the third accelerator 210c, and/or the system memory 202 are in communication via first communication bus 208. In some examples disclosed herein, the host processor 206, the first accelerator 210a, the second accelerator 210b, the third accelerator 210c, and/or the system memory 202 may be in communication via any suitable wired and/or wireless communication system. Additionally, in some examples disclosed herein, each of the host processor 206, the first accelerator 210a, the second accelerator 210b, the third accelerator 210c, and/or the system memory 202 may be in communication with any component exterior to the computing system 200 via any suitable wired and/or wireless communication system.

In the example of FIG. 2, the first accelerator 210a includes an example convolution engine 212, an example RNN engine 214, an example memory 216, an example memory management unit (MMU) 218, an example DSP 220, and example one or more controllers 222. The memory 216 includes an example direct memory access (DMA) unit 224. Additionally, each of the example convolution engine 212, the example RNN engine 214, the example MMU 218, and the example DSP 220includes an example first scheduler 226, an example second scheduler 228, an example third scheduler 230, and an example fourth scheduler 232, respectively. Each of the example DSP 220 and the example one or more controllers 222 additionally include an example first kernel library 234 and an example second kernel library 236.

In the illustrated example of FIG. 2, the convolution engine 212 is a device that is configured to improve the processing of tasks associated convolution. Moreover, the convolution engine 212 improves the processing of tasks associated with the analysis of visual imagery and/or other tasks associated with CNNs. In FIG. 2, the RNN engine 214 is a device that is configured to improve the processing of tasks associated with RNNs. Additionally, the RNN engine 214 improves the processing of tasks associated with the analysis of unsegmented, connected handwriting recognition, speech recognition, and/or other tasks associated with RNNs.

In the example of FIG. 2, the memory 216 is a shared storage between at least one of the convolution engine 212, the RNN engine 214, the MMU 218, the DSP 220, and the one or more controllers 222 including the DMA unit 224. Moreover, the DMA unit 224 of the memory 216 allows at least one of the convolution engine 212, the RNN engine 214, the MMU 218, the DSP 220, and the one or more controllers 222 to access the system memory 202 independent of the host processor 206. In the example of FIG. 2, the memory 216 is a physical storage local to the first accelerator 210a; however, in other examples, the memory 216 may be external to and/or otherwise be remote with respect to the first accelerator 210a. In further examples, the memory 216 may be a virtual storage. In the example of FIG. 2, the memory 216 is a volatile memory (e.g., Synchronous Dynamic Random Access Memory (SDRAM), Dynamic Random Access Memory (DRAM), RAMBUS® Dynamic Random Access Memory (RDRAM®) and/or any other type of random access memory device), In other examples, the memory 216 may be a flash storage. In further examples, the memory 216 may be a non-volatile memory (e.g., ROM, PROM, EPROM, EEPROM, etc.).

In the illustrated example of FIG. 2, the example MMU 218 is a device that includes references to the addresses of the memory 216 and/or the system memory 202. The MMU 218 additionally translates virtual memory addresses utilized by one or more of the convolution engine 212, the RNN engine 214, the DSP 220, and/or the one or more controllers 222 to physical addresses in the memory 216 and/or the system memory 202.

In the example of FIG. 2, the DSP 220 is a device that improves the processing of digital signals. For example, the DSP 220 facilitates the processing to measure, filter, and/or compress continuous real-world signals such as data from cameras, and/or other sensors related to computer vision. In FIG. 2, the one or more controllers 222 is implemented as a control unit of the first accelerator 210a. For example, the one or more controllers 222 directs the operation of the first accelerator 210a. In some examples, a first one of the one or more controllers 222 implements a credit manager while a second one of the one or more controller 222 directs the operations of the first accelerator 210a. Moreover, the one or more controllers 222 can instruct one or more of the convolution engine 212, the RNN engine 214, the memory 216, the MMU 218, and/or the DSP 220 how to respond to machine readable instructions received from the host processor 206.

In the example of FIG. 2, each of the first scheduler 226, the second scheduler 228, the third scheduler 230, and the fourth scheduler 232 is a device that determines in what order and/or when the convolution engine 212, the RNN engine 214, the MMU 218, and the DSP 220, respectively, executes a portion of a workload that has been offloaded and/or otherwise sent to the first accelerator 210a. Additionally, each of the first kernel library 234 and the second kernel library 236 is a data structure that includes one or more kernels. The kernels of the first kernel library 234 and the second kernel library 236 are, for example, routines compiled for high throughput on the DSP 220 and the one or more controllers 222, respectively. The kernels correspond to, for example, executable sub-sections of an executable to be run on the computing system 200.

In examples disclosed herein, each of the convolution engine 212, the RNN engine 214, the memory 216, the MMU 218, the DSP 220, and the one or more controllers 222 is in communication with the other elements of the first accelerator 210a. For example, the convolution engine 212, the RNN engine 214, the memory 216, the MMU 218, the DSP 220, and the one or more controllers 222 are in communication via an example second communication bus 238. In some examples, the second communication bus 238 may be implemented by a configuration and control (CnC) fabric and a data fabric. In some examples disclosed herein, the convolution engine 212, the RNN engine 214, the memory 216, the MMU 218, the DSP 220, and the one or more controllers 222 may be in communication via any suitable wired and/or wireless communication system. Additionally, in some examples disclosed herein, each of the convolution engine 212, the RNN engine 214, the memory 216, the MMU 218, the DSP 220, and the one or more controllers 222 may be in communication with any component exterior to the first accelerator 210a via any suitable wired and/or wireless communication system.

As previously mentioned, each of the example first accelerator 210a, the example second accelerator 210b, and the example third accelerator 210c includes a variety of CBBs some generic to the operation of an accelerator and some specific to the operation of the respective accelerators. For example, each of the first accelerator 210a, the second accelerator 210b, and the third accelerator 210c includes generic CBBs such as memory, an MMU, a controller, and respective schedulers for each of the CBBs.

While, in the example of FIG. 2, the first accelerator 210a implements a VPU and includes the convolution engine 212, the RNN engine 214, and the DSP 220, (e.g., CBBs specific to the operation of specific to the operation of the first accelerator 210a), the second accelerator 210b and the third accelerator 210c may include additional or alternative CBBs specific to the operation of the second accelerator 210b and/or the third accelerator 210c. For example, if the second accelerator 210b implements a GPU, the CBBs specific to the operation of the second accelerator 210b can include a thread dispatcher, a graphics technology interface, and/or any other CBB that is desirable to improve the processing speed and overall performance of processing computer graphics and/or image processing. Moreover, if the third accelerator 210c implements a FPGA, the CBBs specific to the operation of the third accelerator 210c can include one or more arithmetic logic units (ALUs), and/or any other CBB that is desirable to improve the processing speed and overall performance of processing general computations.

While the heterogeneous system 204 of FIG. 2 includes the host processor 206, the first accelerator 210a, the second accelerator 210b, and the third accelerator 210c, in some examples, the heterogeneous system 204 may include any number of processing elements (e.g., host processors and/or accelerators) including application-specific instruction set processors (ASIPs), physic processing units (PPUs), designated DSPs, image processors, coprocessors, floating-point units, network processors, multi-core processors, and front-end processors.

Moreover, while in the example of FIG. 2 the convolution engine 212, the RNN engine 214, the memory 216, the MMU 218, the DSP 220, the one or more controllers 222, the DMA unit 224, the first scheduler 226, the second scheduler 228, the third scheduler 230, the fourth scheduler 232, the first kernel library 234, and the second kernel library 236 are implemented on the first accelerator 210a, one or more of the convolution engine 212, the RNN engine 214, the memory 216, the MMU 218, the DSP 220, the one or more controllers 222, the DMA unit 224, the first scheduler 226, the second scheduler 228, the third scheduler 230, the fourth scheduler 232, the first kernel library 234, and the second kernel library 236 can be implemented on the host processor 206, the second accelerator 210b, and/or the third accelerator 210c.

FIG. 3 is a block diagram illustrating an example computing system 300 including an example graph compiler 302 and one or more example selector(s) 304. In the example of FIG. 3, the computing system 300 further includes an example workload 306 and an example accelerator 308. Furthermore, in FIG. 3, the accelerator 308 includes an example credit manager 310, an example data fabric 311, an example control and configure (CnC) fabric 312, an example an example convolution engine 314, an example MMU 316, an example RNN engine 318, an example DSP 320, an example memory 322, and an example controller 324. In the example of FIG. 3, the memory 322 includes an example DMA unit 326 and one or more example buffers 328. In other examples disclosed herein, any suitable CBB may be included and/or added into the accelerator 308.

In the illustrated example of FIG. 3, the graph compiler 302 is implemented by a logic circuit such as, for example, a hardware processor. However, any other type of circuitry may additionally or alternatively be used such as, for example, one or more analog or digital circuit(s), logic circuits, programmable processor(s), ASIC(s), programmable logic device(s) (PLD(s)), field programmable logic device(s) (FPLD(s)), DSP(s), etc. In FIG. 3, the graph compiler 302 is coupled to the accelerator 308. In operation, the graph compiler 302 receives the workload 306 and compiles the workload 306 into the example executable file to be executed by the accelerator 308. For example, the graph compiler 302 receives the workload 306 and assigns various workload nodes of the workload 306 (e.g., a graph) to various CBBs (e.g., any of the convolution engine 314, the MMU 316, the RNN engine 318, and/or the DSP 320) of the accelerator 308. The graph compiler 302 further generates an example selector of the one or more selector(s) 304 corresponding to each workload node in the workload 306. Upon generating the one or more selector(s) 304, the graph compiler 302 is subsequently coupled to the one or more selector(s) 304. Additionally, the graph compiler 302 allocates memory for one or more buffers 328 in the memory 322 of the accelerator 308. The one or more buffer 328 can be partitioned into a *T* number of tiles.

In the example illustrated in FIG. 3, the one or more selector(s) 304 can be implemented by a logic circuit such as, for example, a hardware processor upon being generated by the graph compiler 302. For example, the one or more selector(s) 304 can be implemented by executable instructions that may be executed on at least one processor. However, any other type of circuitry may additionally or alternatively be used such as, for example, one or more analog or digital circuit(s), logic circuits, programmable processor(s), ASIC(s), PLD(s), FPLD(s), DSP(s), etc. The one or more selector(s) 304 are coupled to the graph compiler 302, the accelerator 308, and to an example kernel bank 332 located within the DSP 320. The one or more selector(s) 304 are coupled to the graph compiler 302 and are configured to obtain and/or otherwise receive the workload 306 from the graph compiler 302.

Each workload node (e.g., task) in the workload 306 generated by the graph compiler 302 indicates a CBB (e.g., any of the convolution engine 314, the MMU 316, the RNN engine 318, and/or the DSP 320) to be used to execute the associated workload node. Each selector of the one or more selector(s) 304 corresponds to one of the workload nodes of the workload. Moreover, as the workload nodes of the workload indicate a CBB to be used to execute the workload node, each selector of the one or more selector(s) 304 is associated with the corresponding CBB (e.g., any of the convolution engine 314, the MMU 316, the RNN engine 318, and/or the DSP 320) and/or kernels in the kernel bank 332. The one or more selector(s) 304 are generated by the graph compiler 302 in response to the workload 306. Upon generation by the graph compiler 302, the one or more selector(s) 304 can identify respective input and/or output conditions of the CBB with which each selector of the one or more selector(s) 304 is associated (e.g., any of the convolution engine 314, the MMU 316, the RNN engine 318, and/or the DSP 320) and/or kernels in the kernel bank 332.

In some examples, the one or more selector(s) 304 can be included in the graph compiler 302. In such examples, additional selectors can be included in the one or more selector(s) 304 or, alternatively, current selectors in the one or more selector(s) 304 can be altered in response to changes in the workload 306 and/or accelerator 308 (e.g., a new workload 306, additional CBBs added to the accelerator 308, etc.).

In additional or alternative examples, the graph compiler 302 identifies a workload node from the workload 306 that indicates that data is to be scaled. Such a workload node indicating data is to be scaled is sent to the one or more selector(s) 304 associated with such a task. The one or more selector(s) 304 associated with the identified workload node can identify the CBB (e.g., any of the convolution engine 314, the MMU 316, the RNN engine 318, and/or the DSP 320) and/or kernel in the kernel bank 332, along with the identified input and/or output conditions of such identified CBB and/or kernel in the kernel bank 332, in order for the graph compiler 302 to execute the workload node. In some examples, the one or more selector(s) 304 can select which CBB (e.g., any of the convolution engine 314, the MMU 316, the RNN engine 318, and/or the DSP 320) and/or kernel in the kernel bank 332 is to execute respective ones of the nodes. For example, for the workload nodes in the graph, the one or more selector(s) 304 can identify a corresponding type of the workload node and for the CBBs in the accelerator, the one or more selector(s) can identify the capabilities of a given CBB and the availability of that corresponding CBB to execute a corresponding one of the workload nodes.

In the example of FIG. 3, the workload 306 is, for example, a graph, function, algorithm, program, application, and/or other code to be executed by the accelerator 308. In some examples, the workload 306 is a description of a graph, function, algorithm, program, application, and/or other code. The workload 306 may be any arbitrary graph obtained from a user and/or any suitable input. For example, the workload 306 may be a workload related to AI processing, such as a deep learning topology and/or computer vision (e.g., a graph related to image processing with a mask R-CNN). Each workload node in the workload 306 (e.g., graph) includes constraints that specify specific CBBs (e.g., any of the convolution engine 314, the MMU 316, the RNN engine 318, and/or the DSP 320), kernels in the kernel bank 332, and/or input and/or output conditions to execute the task in the workload node. As such, the graph compiler 302 can include an example plugin 334 to enable mapping between a workload node of the workload 306 (e.g., the graph) and the associated CBB and/or kernel in the kernel bank 332.

In the example of FIG. 3, the accelerator 308 is coupled to the graph compiler 302 and to the one or more selector(s) 304. In the illustrated example of FIG. 3, the credit manager 310 is coupled to the data fabric 311 and the CnC fabric 312. The credit manager 310 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), DSP(s), etc. The credit manager 310 is a device that manages credits associated with one or more of the convolution engine 314, the MMU 316, the RNN engine 318, and/or the DSP 320. In some examples, the credit manager 310 can be implemented by a controller as a credit manager controller. In some examples, the credit manager 310 can correspond to a first one of the one or more controllers 222 of FIG. 2.

In some examples, credits are representative of data associated with workload nodes that is available in the memory 322 and/or the amount of space available in the memory 322 for the output of the workload node. In additional or alternative examples, credits and/or a credit value may indicate the number of slots in a buffer (e.g., one of the buffers 328) available to store and/or otherwise write data.

The credit manager 310 and/or the controller 324 can partition the memory 322 into one or more buffers (e.g., the buffers 328) associated with each workload node of a given workload based on an executable file received from the graph compiler 302 and distributed by the controller 324. As such, the credits may be representative of slots in the associated buffer (e.g., the buffers 328) available to store and/or otherwise write data. For example, the credit manager 310 receives information corresponding to the workload 306 (e.g., the configure and control messages and/or otherwise configure messages and control messages). For example, the credit manager 310 receives from the controller 324, via the CnC fabric 312, information determined by the controller 324 indicative of the CBBs initialized as a producer and the CBBs initialized a consumer. For example, the information indicative of the CBBs initialized as producers and the CBBs initialized as consumers can be referred to as producer configuration characteristics and consumer configuration characteristics, respectively.

In operation, in response to instruction received from the controller 324 (e.g., in response to the controller 324 transmitting the configure and control messages to one or more CBBs in the accelerator 308) indicating that one or more CBBs are to execute a certain workload node, the credit manager 310 provides and/or otherwise transmits the corresponding credits to the one or more CBBs acting as the initial producer(s) (e.g., provides three credits to the convolution engine 314 to write data into three slots of a buffer). Once the one or more CBBs acting as the initial producer completes the workload node, the credits are sent back to the point of origin as seen by the one or more CBBs (e.g., the credit manager 310). The credit manager 310, in response to obtaining the credits from the producer, provides and/or otherwise transmits the credits to the one or more CBBs acting as the consumer (e.g., the DSP 320 obtains three credits to read data from the three slots of the buffer). Such an order of producer and consumers is determined based on an executable file received from the graph compiler 302. In this manner, the CBBs communicate an indication of ability to operate via the credit manager 310, regardless of their heterogenous nature.

In examples disclosed herein, a producer CBB produces data that is utilized by another CBB whereas a consumer CBB consumes and/or otherwise processes data produced by another CBB. In some examples disclosed herein, the credit manager 310 may be configured to determine whether an execution of a workload node is complete. In such an example, the credit manager 310 may clear all credits in the CBBs associated with the workload node. Additionally, in some examples, a CBB can send a message indicating that the CBB has completed a particular workload node assigned to the CBB utilizing less data than the number of credits that was allocated to the CBB by the credit manager 310. In examples disclosed herein, the message indicating that the CBB has completed a particular workload node assigned to the CBB utilizing less data than the number of credits that was allocated to the CBB by the credit manager 310 is referred to as a last indication. In such an example, the credit manager 310 transmits the number of credits to be utilized by a consumer CBB to process the reduced amount of data to be transmitted from the producer CBB to the consumer CBB, via the CnC fabric 312. The credit manager 310 additionally transmits the last indication to the controller 324 when the credit manager 310 receives the last indication prior to the completion of the workload node. The credit manager 310 determines that the last indication was generated prior to the completion of the workload node based on whether there are additional credits for the workload node that generated the last indication when the credit manager 310 receives the last indication.

In the example of FIG. 3, the data fabric 311 is coupled to the credit manager 310, the convolution engine 314, the MMU 316, the RNN engine 318, the DSP 320, the memory 322, and the controller 324. The data fabric 311 is a control fabric including a network of electronic interconnections and at least one logic circuit that allow one or more of the credit manager 310, the convolution engine 314, the MMU 316, the RNN engine 318, and/or the DSP 320 to transmit data to and/or receive data from one or more of the credit manager 310, the convolution engine 314, the MMU 316, the RNN engine 318, the DSP 320, the memory 322, and/or the controller 324. In other examples disclosed herein, any suitable computing fabric may be used to implement the data fabric 311 (e.g., an Advanced eXtensible Interface (AXI), etc.).

In the example of FIG. 3, the CnC fabric 312 is coupled to the credit manager 310, the convolution engine 314, the MMU 316, the RNN engine 318, the DSP 320, the memory 322, and the controller 324. The CnC fabric 312 is a control fabric including a network of electronic interconnections and at least one logic circuit that allow one or more of the credit manager 310, the convolution engine 314, the MMU 316, the RNN engine 318, and/or the DSP 320 to transmit credits to and/or receive credits from one or more of the credit manager 310, the convolution engine 314, the MMU 316, the RNN engine 318, the DSP 320, the memory 322, and/or the controller 324. In addition, the CnC fabric 312 is configured to facilitate transmission of example configure and control messages to and/or from the one or more selector(s) 304. In other examples disclosed herein, any suitable computing fabric may be used to implement the CnC fabric 312 (e.g., an AXI, etc.).

In the illustrated example of FIG. 3, the convolution engine 314 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), DSP(s), etc. The convolution engine 314 is coupled to the data fabric 311 and the CnC fabric 312. The convolution engine 314 is a device that is configured to improve the processing of tasks associated convolution. Moreover, the convolution engine 314 improves the processing of tasks associated with the analysis of visual imagery and/or other tasks associated with CNNs.

In the illustrated example of FIG. 3, the example MMU 316 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), DSP(s), etc. The MMU 316 is coupled to the data fabric 311 and the CnC fabric 312. The MMU 316 is a device that enables translation of addresses of the memory 322 and/or a memory that is remote with respect to the accelerator 308. The MMU 316 additionally translates virtual memory addresses utilized by one or more of the credit manager 310, the convolution engine 314, the RNN engine 318, and/or the DSP 320 to physical addresses in the memory 322 and/or the memory that is remote with respect to the accelerator 308.

In FIG. 3, the RNN engine 318 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), DSP(s), etc. The RNN engine 318 is coupled to the data fabric 311 and the CnC fabric 312. The RNN engine 318 is a device that is configured to improve the processing of tasks associated with RNNs. Additionally, the RNN engine 318 improves the processing of tasks associated with the analysis of unsegmented, connected handwriting recognition, speech recognition, and/or other tasks associated with RNNs.

In the example of FIG. 3, the DSP 320 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), DSP(s), etc. The DSP 320 is coupled to the data fabric 311 and the CnC fabric 312. The DSP 320 is a device that improves the processing of digital signals. For example, the DSP 320 facilitates the processing to measure, filter, and/or compress continuous real-world signals such as data from cameras, and/or other sensors related to computer vision.

In the example of FIG. 3, the memory 322 may be implemented by any device for storing data such as, for example, flash memory, magnetic media, optical media, etc. Furthermore, the data stored in the example memory 322 may be in any data format such as, for example, binary data, comma delimited data, tab delimited data, structured query language (SQL) structures, etc. The memory 322 is coupled to the data fabric 311 and the CnC fabric 312. The memory 322 is a shared storage between at least one of the credit manager 310, the convolution engine 314, the MMU 316, the RNN engine 318, the DSP 320, and/or the controller 324. The memory 322 includes the DMA unit 326. Additionally, the memory 322 can be partitioned into the one or more buffers 328 associated with one or more workload nodes of a workload associated with an executable received by the controller 324 and/or the credit manager 310. Moreover, the DMA unit 326 of the memory 322 allows at least one of the credit manager 310, the convolution engine 314, the MMU 316, the RNN engine 318, the DSP 320, and/or the controller 324 to access a memory (e.g., the system memory 202) remote to the accelerator 308 independent of a respective processor (e.g., the host processor 206).

In the example of FIG. 3, the memory 322 is a physical storage local to the accelerator 308. Additionally or alternatively, the memory 322 may be external to and/or otherwise be remote with respect to the accelerator 308. In further examples disclosed herein, the memory 322 may be a virtual storage. In the example of FIG. 3, the memory 322 is a volatile memory (e.g., SDRAM, DRAM, RDRAM®, and/or any other type of random access memory device), In other examples, the memory 322 may be a flash storage. In further examples, the memory 322 may be a non-volatile memory (e.g., ROM, PROM, EPROM, EEPROM, etc.).

In the example of FIG. 3, the controller 324 is implemented by a logic circuit such as, for example, a hardware processor. However, any other type of circuitry may additionally or alternatively be used such as, for example, one or more analog or digital circuit(s), logic circuits, programmable processor(s), ASIC(s), PLD(s), FPLD(s), DSP(s), etc. The controller 324 is implemented as a control unit of the accelerator 308. In examples disclosed herein, the controller 324 obtains and parses an executable file generated by the graph compiler 302 to provide configuration and control messages (e.g., the configuration and control messages obtained by and/or sent to the one or more selector(s) 304) indicative of the workload nodes included in the executable file. As such, the controller 324 provides the configuration and control messages (e.g., the configuration and control messages obtained by and/or sent to the one or more selector(s) 304) to the various CBBs in order to perform the tasks of the executable file.

In the example of FIG. 3, the controller 324 additionally monitors the CBBs and credit manager 310 to determine whether the workload has completed execution on the accelerator 308. If all CBBs to which workload nodes were assigned have completed execution of the workload nodes, the controller 324 generates a final result of the workload as composite of the results from each of the CBBs to which workload nodes were assigned and transmits the final result to the graph compiler 302 (e.g., an external device). In other examples, the controller 324 generates the final result of the workload and transmits the final result to a driver associated with the accelerator 308. If the controller 324 receives a last indication from the credit manager 310, the controller 324 subsequently monitors the CBB to which the last workload node in the workload was assigned for a last indication. If the controller 324 detects the last indication at the CBB to which the last workload node in the workload was assigned, the controller 324 generates the final result and transmits the final result to the graph compiler 302 regardless of whether the other CBBs to which workload nodes in the workload were assigned have generated the last indication.

In some examples, the configuration and control messages may be generated by the controller 324 and sent to the one or more selector(s) 304 and to the various CBBs and/or kernels located in the kernel bank 332. For example, the controller 324 parses the executable file to identify the workloads in the executable and instructs one or more of the convolution engine 314, the MMU 316, the RNN engine 318, the DSP 320, a kernel in the kernel bank 332, and/or the memory 322 how to respond to the executable file and/or other machine readable instructions received from the graph compiler 302 via the credit manager 310 and/or the controller 324.

In the example of FIG. 3, the controller 324 transmits the workload nodes (e.g., in configuration and control message format) from the obtained executable file 330 to the corresponding CBBs identified. Likewise, the controller 324 may transmit the workload nodes (e.g., in configuration and control message format) to the credit manager 310 to initiate distribution of credits.

In the example of FIG. 3, the convolution engine 314, the MMU 316, the RNN engine 318, and/or the DSP 320, respectively, include respective schedulers 338, 340, 342, and 344. In operation, the schedulers 338, 340, 342, and 344, respectively, determine how a portion of the workload 306 (e.g., a workload node) that has been assigned to the convolution engine 314, the MMU 316, the RNN engine 318, and/or the DSP 320, respectively, by the controller 324, the credit manager 310, and/or an additional CBB of the accelerator 308 are to be executed at the respective CBB. Depending on the tasks and/or other operations of a given workload node, the workload node can be a producer or a consumer.

For example, the scheduler 344 loads the workload nodes assigned to the DSP 320. Moreover, the scheduler 338 selects a workload node from the assigned workload nodes according to a schedule generated by the credit manager 310 and/or the controller 324. Additionally, the scheduler 344 determines whether there are credits available for the selected workload node. If the scheduler 344 determines that there are credits available to dispatch the selected workload node to the DSP 320 (e.g., the credit manager 310 transmitted credits to the scheduler 344), the scheduler 344 determines whether the credits include a last indication.

In FIG. 3, if the scheduler 344 determines that the credits do not include a last indication, the scheduler 344 determines data dependencies of the selected workload. For example, data dependencies that are indicative of candidacy for early termination can be the determination that three objects have been identified in an image and that all three objects have been identified with a probability value that satisfies a threshold value related to identification. Subsequently, the scheduler 344 determines whether the selected workload node is a candidate for early termination based on the data dependencies of the selected workload node. For example, the scheduler 344 can determine that the selected workload node is a candidate for early termination based on the determination that three objects have been identified in an image and that all three objects have been identified with a probability value that satisfies a threshold value related to identification. Additionally or alternatively, the scheduler 344 can determine that the selected workload node is a candidate for early termination based on the determination that additional candidate regions beyond a threshold amount would not be useful during further execution at other CBBs in the graph (e.g., the convolution engine 314, the RNN engine 318, etc.). If the scheduler 344 determines that selected workload node is a candidate for early termination, the scheduler 344 sets the last indication for the last tile to be executed at the DSP 320. For example, the last tile to be executed at the DSP 320 can be the 750^{th} tile in a 1000 tile data stream to be executed at the DSP 320. Subsequently, the scheduler 344 dispatches the selected workload node to be executed at the DSP 320.

In the example of FIG. 3, the scheduler 344 determines whether a tile of data has been transmitted from the DSP 320 to one of the one or more buffers 328 in the memory 322. If the scheduler 344 determines that the DSP 320 has transmitted a tile to one of the one or more buffers 328, the scheduler 344 transmits a credit to the credit manager 310. Subsequently, the scheduler 344 determines whether the transmitted tile is associated with the last indication. In examples disclosed herein, CBBs transmit data to the one or more buffers 328 via the data fabric 311. If the scheduler 344 determines that the tile is associated with the last indication, the last indication to the credit manager 310. If the scheduler 344 determines that the tile is not associated with the last indication, the scheduler 344 determines whether there are additional credits for the selected workload node. If there are additional credits associated with the selected workload node, the scheduler 344 monitors the DSP 320 as it transmits tiles to one or more of the buffers 328 to determine if there is a last indication. If there are not additional credits associated with the selected workload node, the scheduler 344 transmits the last indication to the credit manager 310 and stops the execution of the selected workload node at the DSP 320.

In the illustrated example of FIG. 3, the kernel bank 332 is a data structure that includes one or more kernels. The kernels of the kernel bank 332 are, for example, routines compiled for high throughput on the DSP 320. In other examples disclosed herein, each CBB (e.g., any of the convolution engine 314, the MMU 316, the RNN engine 318, and/or the DSP 320) may include a respective kernel bank. The kernels correspond to, for example, executable sub-sections of an executable to be run on the accelerator 308. While, in the example of FIG. 3, the accelerator 308 implements a VPU and includes the credit manager 310, the data fabric 311, the CnC fabric 312, the convolution engine 314, the MMU 316, the RNN engine 318, the DSP 320, and the memory 322, and the controller 324, the accelerator 308 may include additional or alternative CBBs to those illustrated in FIG. 3. In an additional and/or alternate example disclosed herein, the kernel bank 332 is coupled to the one or more selector(s) 304 to be abstracted for use by the graph compiler 302.

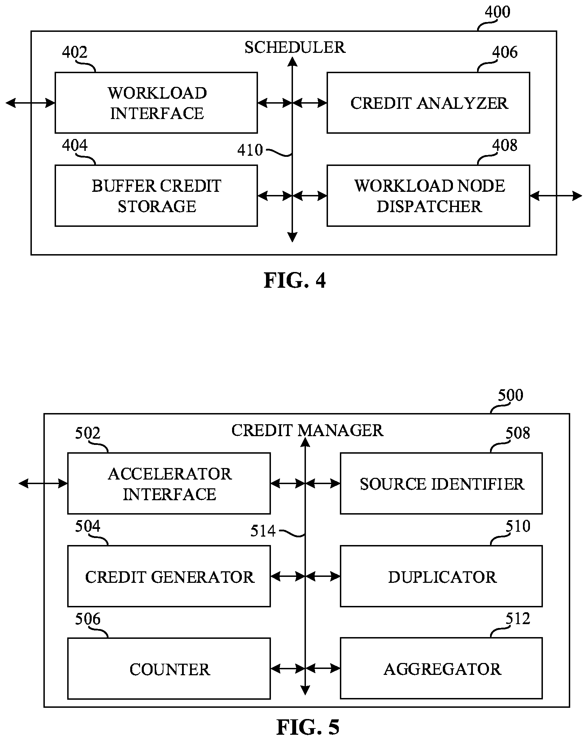

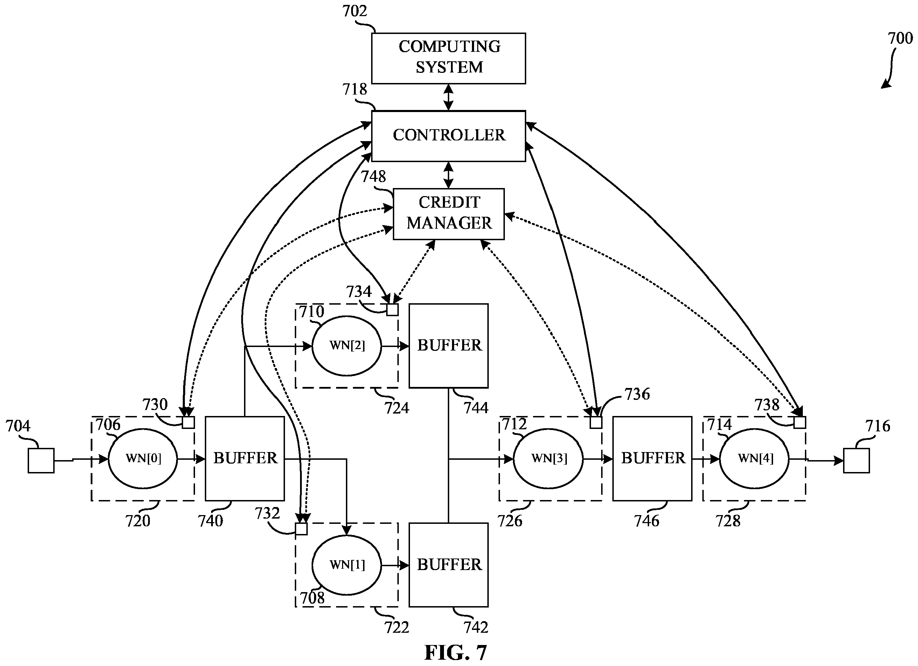

FIG. 4 is a block diagram of an example scheduler 400 that can implement one or more of the schedulers of FIGS. 2, 3, and 7. For example, the scheduler 400 is an example implementation of the first scheduler 226, the second scheduler 228, the third scheduler 230, and/or the fourth scheduler 232 of FIG. 2, and/or the scheduler 338, the scheduler 340, the scheduler 342 and/or the scheduler 344 of FIG. 3, and/or the first scheduler 730, the second scheduler 732, the third scheduler 734, the fourth scheduler 736, and/or the fifth scheduler 738 of FIG. 7.

In the example of FIG. 4, the scheduler 400 includes an example workload interface 402, an example buffer credit storage 404, an example credit analyzer 406, an example workload node dispatcher 408, and an example communication bus 410. The scheduler 400 is a device that determines in what order and/or when a CBB with which the scheduler 400 is associated executes a portion of a workload (e.g., a workload node) that has been assigned to the CBB with which the scheduler 400 is associated.

In the illustrated example of FIG. 4, workload interface 402 is a device that is configured to communicate with other devices external to the scheduler 400, the buffer credit storage 404, the credit analyzer 406, and/or the workload node dispatcher 408. For example, the workload interface 402 can receive and/or otherwise obtain workload nodes to be executed by the CBB with which the scheduler 400 is associated. Additionally or alternatively, the workload interface 402 can transmit credits to and/or receive credits from other schedulers, other CBBs, and/or other devices. Moreover, the workload interface 402 can load the credits corresponding to the input buffers to a workload node and/or the output buffers from a workload node into and/or out of the buffer credit storage 404.

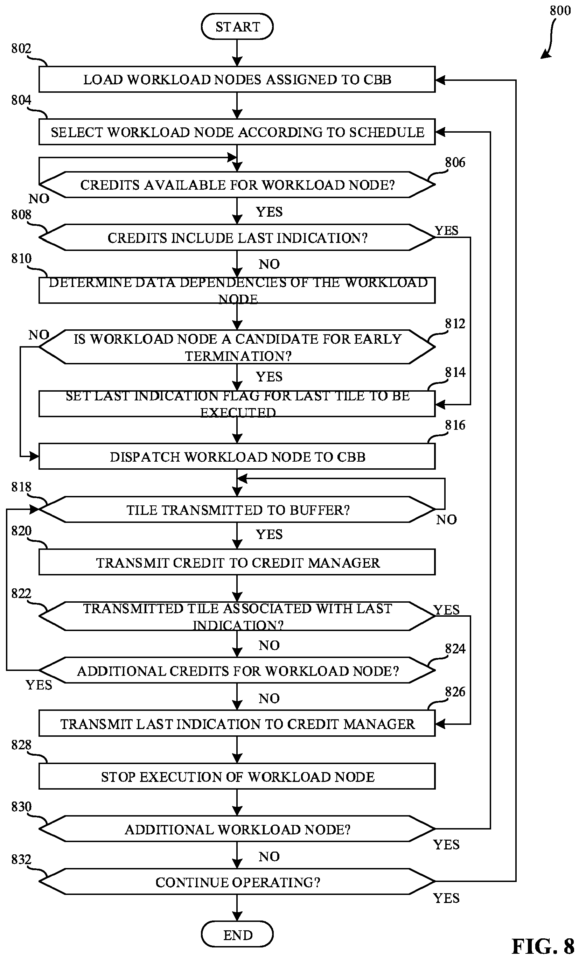

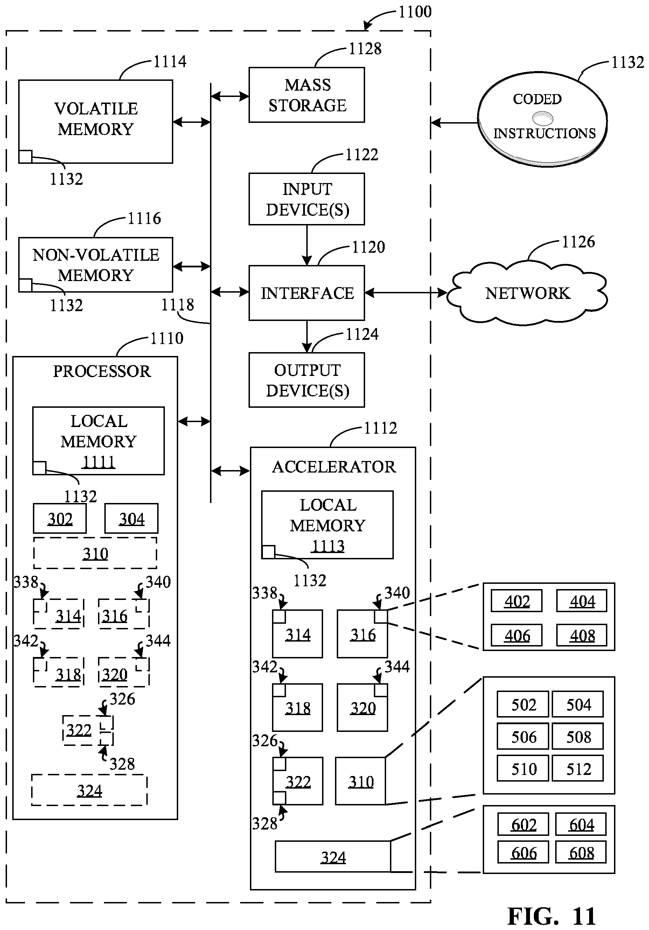

In some examples, the example workload interface 402 implements example means for interfacing. The interfacing means is implemented by executable instructions such as that implemented by at least blocks 802, 818, 820, 822, 824, 826, and 832 of FIG. 8. For example, the executable instructions of blocks 802, 818, 820, 822, 824, 826, and 832 of FIG. 8 may be executed on at least one processor such as the example processor 1110 and/or the example accelerator 1112 shown in the example of FIG. 11. In other examples, the interfacing means is implemented by hardware logic, hardware implemented state machines, logic circuitry, and/or any other combination of hardware, software, and/or firmware.

In the example illustrated in FIG. 4, the buffer credit storage 404 is a shared storage between at least one of the workload interface 402, the credit analyzer 406, and/or the workload node dispatcher 408. The buffer credit storage 404 is a physical storage local to the scheduler 400. However, in other examples, the buffer credit storage 404 may be external to and/or otherwise be remote with respect to the scheduler 400. In further examples, the buffer credit storage 404 may be a virtual storage. In the example of FIG. 4, the buffer credit storage 404 is a volatile memory (e.g., SDRAM, DRAM, RDRAM®, and/or any other type of random access memory device), In other examples, the buffer credit storage 404 may be a flash storage. In further examples, the buffer credit storage 404 may be a non-volatile memory (e.g., ROM, PROM, EPROM, EEPROM, etc.).

In the example of FIG. 4, the buffer credit storage 404 is memory that is associated with storing credits corresponding to input buffers to workload nodes and/or output buffers from workload nodes associated with workload nodes assigned to the CBB with which the scheduler 400 is associated. For example, the buffer credit storage 404 can be implemented as a data structure including fields for each workload node that is assigned to the CBB with which the scheduler 400 is associated and fields for each input buffers to workload nodes and/or each output buffers from workload nodes associated with workload nodes assigned to the CBB with which the scheduler 400 is associated. In the illustrated example of FIG. 4, the buffer credit storage 404 can additionally or alternatively store workload nodes that have been assigned to the CBB with which the scheduler 400 is associated.

In some examples, the example buffer credit storage 404 implements example means for storing. The storing means can be implemented by executable instructions such as that implemented in FIG. 8. For example, the executable instructions may be executed on at least one processor such as the example processor 1110 and/or the example accelerator 1112 shown in the example of FIG. 11. In other examples, the storage means is implemented by hardware logic, hardware implemented state machines, logic circuitry, and/or any other combination of hardware, software, and/or firmware.

In the example illustrated in FIG. 4, the credit analyzer 406 is a device that is configured to determine whether the selected workload node is a candidate for early termination. The credit analyzer 406 is configured to select a workload node assigned to the CBB with which the scheduler 400 is associated according to a schedule received from a credit manager (e.g., the credit manager 310) and/or a controller (e.g., the controller 324).

In the example of FIG. 4, the credit analyzer 406 is additionally configured to determine whether the scheduler 400 has received credits for the selected workload node. If the scheduler 400 has not received credits for the selected workload node, the credit analyzer 406 continues to monitor for credits for the selected workload node.

In the example illustrated in FIG. 4, if the scheduler 400 has received credits for the selected workload node, the credit analyzer 406 determines whether the credits for the selected workload node include a last indication. If the credit analyzer 406 determines that the credits for the selected workload node includes a last indication, the credit analyzer 406 sets the last indication flag for the last tile in the workload node to be executed and transmits the selected workload node to the workload node dispatcher 408 to be dispatched.

If the credit analyzer 406 determines that the credits for the selected workload node do not include a last indication, the credit analyzer 406 determines the data dependencies of the selected workload node. Subsequently, the credit analyzer 406 determines whether the selected workload node is a candidate for early termination. For example, based on the data dependencies of the selected workload node (e.g., based on data dependencies of the selected workload), the credit analyzer 406 can determine whether the selected workload node is a candidate for early termination. If the credit analyzer 406 determines that the selected workload node is a candidate for early termination, the credit analyzer 406 sets the last indication flag for the last tile in the workload node to be executed and transmits the selected workload node to the workload node dispatcher 408 to be dispatched.

In some examples, the example credit analyzer 406 implements example means for analyzing. The analyzing means is implemented by executable instructions such as that implemented by at least blocks 804, 806, 808, 810, 812, and 814 of FIG. 8. For example, the executable instructions of blocks 804, 806, 808, 810, 812, and 814 of FIG. 8 may be executed on at least one processor such as the example processor 1110 and/or the example accelerator 1112 shown in the example of FIG. 11. In other examples, the analyzing means is implemented by hardware logic, hardware implemented state machines, logic circuitry, and/or any other combination of hardware, software, and/or firmware.

In the example of FIG. 4, the workload node dispatcher 408 is a device that dispatches the one or more workload nodes assigned to the CBB with which the scheduler 400 is associated to be executed on the CBB with which the scheduler 400 is associated. For example, after the selected workload node has been analyzed, the workload node dispatcher 408 dispatches the selected workload node to the CBB with which the scheduler 400 is associated.

In some examples, the example workload node dispatcher 408 implements example means for dispatching. The dispatching means is implemented by executable instructions such as that implemented by at least blocks 816, 828, and 830 ofFIG. 8. For example, the executable instructions of blocks 816, 828, and 830 of FIG. 8 may be executed on at least one processor such as the example processor 1110 and/or the example accelerator 1112 shown in the example of FIG. 11. In other examples, the dispatching means is implemented by hardware logic, hardware implemented state machines, logic circuitry, and/or any other combination of hardware, software, and/or firmware.

In the example illustrated in FIG. 4, as the dispatched workload node is executed by the CBB with which the scheduler 400 is associated, the workload interface 402 determines whether the CBB with which the scheduler 400 is associated has transmitted a tile to a buffer associated with the selected workload node. For example, the workload interface 402 can determine whether the CBB with which the scheduler 400 is associated has transmitted a tile to the buffer associated with the selected workload node by monitoring the CBB with which the scheduler 400 is associated. If the workload interface 402 determines that the CBB with which the scheduler 400 is associated has not transmitted a tile to the buffer associated with the selected workload node, the workload interface 402 continues to monitor the CBB with which the scheduler 400 is associated.

If the workload interface 402 determines that the CBB with which the scheduler 400 is associated has transmitted a tile to the buffer associated with the selected workload node, the workload interface 402 transmits a credit to a credit manager (e.g., the credit manager 310) and determines whether the transmitted tile is associated with the last indication. The workload interface 402 can determine whether the transmitted tile is associated with the last indication based on whether the last indication flag is set for the transmitted tile. If the workload interface 402 determines that the transmitted tile is associated with the last indication, the workload interface 402 transmits the last indication to the credit manager.

If the workload interface 402 determines that the transmitted tile is not associated with the last indication, the workload interface 402 determines whether there are additional credits for the selected workload node. For example, the workload interface 402 can determine whether there are additional credits for the selected workload node based on the buffer credit storage 404. If the workload interface 402 determines that there are additional credits for the selected workload node, the workload interface 402 monitors the CBB with which the scheduler 400 is associated for tiles transmitted to the buffer associated with the selected workload.

If the workload interface 402 determines that there are not additional credits for the selected workload node, the workload interface 402 transmits the last indication to the credit manager. Subsequently, the workload node dispatcher 408 stops the execution of the selected workload node at the CBB with which the scheduler 400 is associated. The workload node dispatcher 408 additionally determines if there are additional workload nodes to be executed. If there are additional workload nodes in the schedule, the credit analyzer 406 selects the next workload according to the scheduler.

In examples disclosed herein, each of the workload interface 402, the buffer credit storage 404, the credit analyzer 406, and the workload node dispatcher 408 is in communication with the other elements of the scheduler 400. For example, the workload interface 402, the buffer credit storage 404, the credit analyzer 406, and the workload node dispatcher 408 are in communication via an example communication bus 410. In some examples disclosed herein, the workload interface 402, the buffer credit storage 404, the credit analyzer 406, and the workload node dispatcher 408 may be in communication via any suitable wired and/or wireless communication system. Additionally, in some examples disclosed herein, each of the workload interface 402, the buffer credit storage 404, the credit analyzer 406, and the workload node dispatcher 408 may be in communication with any component exterior to the scheduler 400 via any suitable wired and/or wireless communication system.

FIG. 5 is an example block diagram of the credit manager 500 that can implement at least one of the one or more controllers 222 of FIG. 2 and/or the credit manager 310 of FIG. 3 and/or the credit manager 748 of FIG. 7. In the example of FIG. 5, the credit manager 500 includes an example accelerator interface 502, an example credit generator 504, an example counter 506, an example source identifier 508, an example duplicator 510, an example aggregator 512, and a communication bus 514. The credit manager 500 is configured to communicate with a data fabric (e.g., the data fabric 311 of FIG. 3) and a CnC fabric (e.g., the CnC fabric 312 of FIG. 3) but may additionally or alternatively be configured to be coupled directly to different CBBs (e.g., the controller 324, the convolution engine 314, the MMU 316, the RNN engine 318, and/or the DSP 320).

In the example of FIG. 5, the credit manager 500 includes the accelerator interface 502. The accelerator interface 502 is hardware which facilitates communications to and from the credit manager 500. For example, the accelerator interface 502 is device that is configured to communicate with other devices external to the credit manager 500, the credit generator 504, the counter 506, the source identifier 508, the duplicator 510, and/or the aggregator 512. For example, the accelerator interface 502 can receive and/or otherwise obtain as configuration information, credits, and/or other information. The accelerator interface 502 can also package information, such as credits, to provide to a producer CBB and/or a consumer CBB. Additionally, the accelerator interface 502 controls where data is to be output to from the credit manager 500. For example, when the accelerator interface 502 receives information, instructions, a notification, etc., from the credit generator 504 indicating credits are to be provided to the producer CBB, the accelerator interface 502 transmits the credits to the producer CBB.

In some examples, the accelerator interface 502 receives configuration information from the controller (e.g., the one or more controllers 222 of FIG. 2, the controller 324 of FIG. 3, etc.) of the accelerator with which the credit manager 500 is associated. For example, during execution of a workload, the controller of the accelerator with which the credit manager 500 is associated can partition the memory of the accelerator into one or more buffers and provide the buffer characteristic information to the accelerator interface 502 for use in determining a number of credits to generate. In additional or alternative examples, when the accelerator interface 502 receives a credit from a producer CBB and/or a consumer CBB, the accelerator interface 502 can determine whether the credit was sent with a last indication prior to the completion of the workload node assigned to the producer CBB and/or the consumer CBB. For example, the accelerator interface 502 can compare the tile count of the counter 506 to the configuration information which indicates the number of tiles to be produced by and/or consumed by a producer CBB and/or consumer CBB. If the credit was sent with a last indication prior to the tile counter reaching the value provided in the configuration information, the accelerator interface 502 can set the last indication flag. Furthermore, upon transmitting credits to the one or more consumer CBBs, the accelerator interface 502 determines whether the last indication flag is set. If the last indication flag is set, the accelerator interface 502 transmits the last indication to each of the *n* consumers and to a controller (e.g., the controller 324 of FIG. 3).

In some examples, the accelerator interface 502 may communicate information between the credit generator 504, the counter 506, the source identifier 508, the duplicator 510, and/or the aggregator 512. For example, the accelerator interface 502 initiates the duplicator 510 and/or the aggregator 512 depending on the source identifier 508 identification. Additionally, the accelerator interface 502 receives information corresponding to a workload. For example, the accelerator interface 502 receives, via the CnC fabric (e.g., the CnC fabric 312 of FIG. 3), information determined by a compiler (e.g., the graph compiler 302 of FIG. 3) and a controller (e.g., the controller 324 of FIG. 3) indicative of the CBB initialized as the producer and the CBBs initialized as consumers.

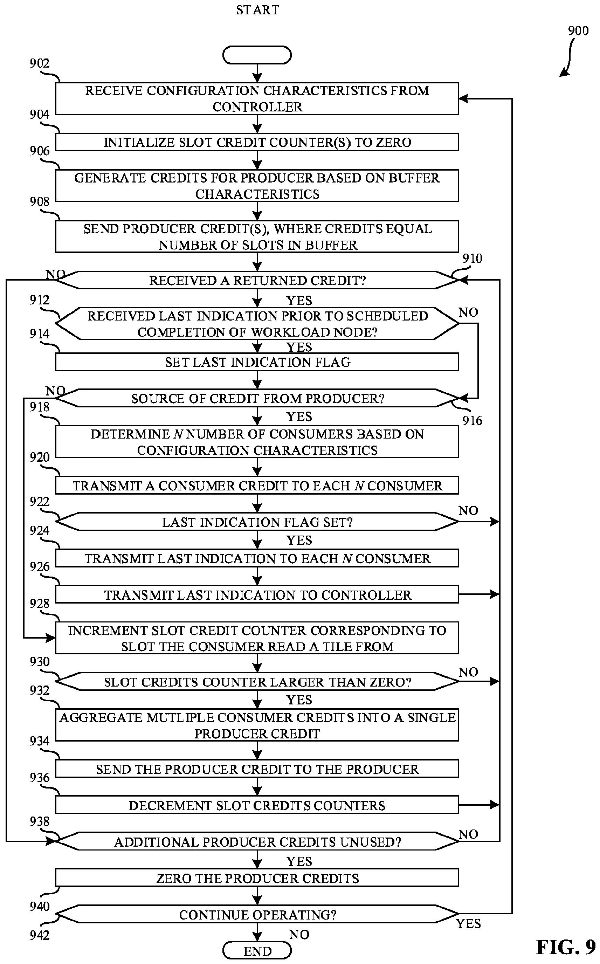

In some examples, the example accelerator interface 502 implements example means for interfacing. The interfacing means is implemented by executable instructions such as that implemented by at least blocks 902, 908, 910, 912, 914, 920, 922, 924, 926, 934, 938, and 942 of FIG. 9. For example, the executable instructions of blocks 902, 908, 910, 912, 914, 920, 922, 924, 926, 934, 938, and 942 of FIG. 9 may be executed on at least one processor such as the example processor 1110 and/or the example accelerator 1112 shown in the example of FIG. 11. In other examples, the interfacing means is implemented by hardware logic, hardware implemented state machines, logic circuitry, and/or any other combination of hardware, software, and/or firmware.

In the example of FIG. 5, the credit manager 500 includes the credit generator 504 to generate a credit or a plurality of credits based on information received from the center fabric (e.g., the CnC fabric 312 of FIG. 3). For example, the credit generator 504 is initialized when the accelerator interface 502 receives information corresponding to the initialization of a buffer (e.g., the buffer 328 of FIG. 3). Such information may include a size and a number of slots of the buffer (e.g., storage size). The credit generator 504 generates *n* number of credits based on the *n* number of slots in the buffer. The *n* number of credits, therefore, are indicative of an available *n* number of spaces in a memory that a CBB can write to or read from. The credit generator 504 provides the *n* number of credits to the accelerator interface 502 to package and send to a corresponding producer, determined by a controller (e.g., the controller 324 of FIG. 3) and communicated over the CnC fabric (e.g., the CnC fabric 312 of FIG. 3).

In some examples, the example credit generator 504 implements example means for generating. The generating means is implemented by executable instructions such as that implemented by at least blocks 906 and 940 of FIG. 9. For example, the executable instructions of blocks 906 and 940 of FIG. 9 may be executed on at least one processor such as the example processor 1110 and/or the example accelerator 1112 shown in the example of FIG. 11. In other examples, the generating means is implemented by hardware logic, hardware implemented state machines, logic circuitry, and/or any other combination of hardware, software, and/or firmware.

In the example of FIG. 5, the credit manager 500 includes the counter 506 to control the amount of credits at each producer or consumer. For example, the counter 506 may include a plurality of counters where each of the plurality of counters are assigned to one producer and one or more consumers. A counter assigned to a producer (e.g., a producer credits counter) is controlled by the counter 506, where the counter 506 initializes a producer credits counter to zero when no credits are available for the producer. Further, the counter 506 increments the producer credits counter when the credit generator 504 generates credits for the corresponding producer. Additionally, the counter 506 decrements the producer credits counter when the producer uses a credit (e.g., when the producer writes data to a buffer such as the buffer 328 of FIG. 3). The counter 506 may initialize one or more consumer credits counters in a similar manner as the producer credits counters. In some examples, when execution of a workload is complete, the producer may have extra credits not used. In this case, the counter 506 zeros the producer credits counter and removes the extra credits from the producer.

In additional or alternative examples, the counter 506 can track the amount of data processed by a consumer CBB and/or a producer CBB over time. For example, if the configuration information indicates that a producer CBB will produce 750 tiles of data after processing 1000 tiles, the counter 506 can track the number of credits utilized by the producer CBB over time with a tile counter associated with the producer CBB. The tile counter can be, for example, a counter that tracks the number of tiles produced by and/or consumed by a producer CBB and/or a consumer CBB over time. For example, if five credits are assigned to and/or generated for the producer CBB and the producer CBB sends fifteen credits to the credit manager 500 over a period of time (e.g., five credits over three cycles), the counter 506 can increment the tile counter for each credit received such that the tile counter would be at a value of fifteen.

In some examples, the example counter 506 implements example means for counting. The counting means is implemented by executable instructions such as that implemented by at least blocks 904, 928, and 936 of FIG. 9. For example, the executable instructions of blocks 904, 928, and 936 of FIG. 9 may be executed on at least one processor such as the example processor 1110 and/or the example accelerator 1112 shown in the example of FIG. 11. In other examples, the counting means is implemented by hardware logic, hardware implemented state machines, logic circuitry, and/or any other combination of hardware, software, and/or firmware.

In the example of FIG. 5, the credit manager 500 includes the source identifier 508 to identify where incoming credits originate from. For example, the source identifier 508, in response to the accelerator interface 502 receiving one or more credits over the CnC fabric (e.g., the CnC fabric 312 of FIG. 3), analyzes a message, an instruction, metadata, etc., to determine if the credit is from a producer or a consumer. For example, the source identifier 508 can determine if the received credit is from the convolution engine 314 by analyzing the task or part of a task associated with the received credit and the convolution engine 314. In other examples, the source identifier 508 only identifies whether the credit was provided by a producer or a consumer by extracting information from the controller 324. Additionally, when a CBB provides a credit to the CnC fabric (e.g., the CnC fabric 312 of FIG. 3), the CBB may provide a corresponding message or tag, such as a header, that identifies where the credit originates from. The source identifier 508 initializes the duplicator 510 and/or the aggregator 512 based on where the received credit originated from.

In some examples, the example source identifier 508 implements example means for identifying. The identifying means is implemented by executable instructions such as that implemented by at least block 916 of FIG. 9. For example, the executable instructions of block 916 of FIG. 9 may be executed on at least one processor such as the example processor 1110 and/or the example accelerator 1112 shown in the example of FIG. 11. In other examples, the identifying means is implemented by hardware logic, hardware implemented state machines, logic circuitry, and/or any other combination of hardware, software, and/or firmware.

In the example FIG. 5, the credit manager 500 includes the duplicator 510 to multiply a credit by a factor of *m,* where *m* corresponds to a number of corresponding consumers. For example, *m* number of consumers was determined by the controller (e.g., the controller 324 of FIG. 3) and provided in the configuration information when the workload was compiled as an executable. The accelerator interface 502 receives the information corresponding to the producer CBB and consumer CBBs and provides relevant information to the duplicator 510, such as how many consumers are consuming data from the buffer (e.g., the buffer 328 of FIG. 3). The source identifier 508 operates in a manner that controls the initialization of the duplicator 510. For example, when the source identifier 508 determines the source of a received credit is from a producer, the source identifier 508 notifies the duplicator 510 that a producer credit has been received and the consumer(s) can be provided with a credit. In this manner, the duplicator 510 multiplies the one producer credit by *m* number of consumers in order to provide each consumer with one credit. For example, if there are two consumers, the duplicator 510 multiplies each received producer credit by 2, where one of the two credits is provided to the first consumer and the second of the two credits is provided to the second consumer.

In some examples, the example duplicator 510 implements example means for duplicating. The duplicating means is implemented by executable instructions such as that implemented by at least block 918 of FIG. 9. For example, the executable instructions of block 918 of FIG. 9 may be executed on at least one processor such as the example processor 1110 and/or the example accelerator 1112 shown in the example of FIG. 11. In other examples, the duplicating means is implemented by hardware logic, hardware implemented state machines, logic circuitry, and/or any other combination of hardware, software, and/or firmware.

In the example of FIG. 5, the credit manager 500 includes the aggregator 512 to aggregate consumer credits to generate one producer credit. The aggregator 512 is initialized by the source identifier 508. The source identifier 508 determines when one or more consumers provide a credit to the credit manager 500 and initializes the aggregator 512. In some examples, the aggregator 512 is not notified to aggregate credits until each consumer has utilized a credit corresponding to the same available space in the buffer. For example, if two consumers each have one credit for reading data from a first space in a buffer and only the first consumer has utilized the credit (e.g., consumed/read data from the first space in the buffer), the aggregator 512 will not be initialized. Further, the aggregator 512 will be initialized when the second consumer utilizes the credit (e.g., consumes/reads the data from the first space in the buffer). In this manner, the aggregator 512 combines the two credits into a single credit and provides the credit to the accelerator interface 502 for transmitting to the producer. In examples disclosed herein, the aggregator 512 waits to receive all the credits for a single space in a buffer because the space in the buffer is not obsolete until the data of that space in the buffer has been consumed by all appropriate consumers. The consumption of data is determined by a controller (e.g., the controller 324 of FIG. 3) based on an executable received from an external device (e.g., the host processor 206, the graph compiler 302, etc.) such that all the consumer CBBs of a producer CBB consume data in order to execute the workload in the intended manner. In this manner, the aggregator 512 queries the counter 506 to determine when to combine the multiple returned credits into the single producer credit. For example, the counter 506 may control a slot credits counter. The slots credit counter may be indicative of a number of credits corresponding to a slot in the buffer. If the slot credits counter equals the m number of consumers of the workload, the aggregator 512 may combine the credits to generate the single producer credit.

In some examples, the example aggregator 512 implements example means for aggregating. The aggregating means is implemented by executable instructions such as that implemented by at least blocks 930 and 932 of FIG. 9. For example, the executable instructions of blocks 930 and 932 of FIG. 9 may be executed on at least one processor such as the example processor 1110 and/or the example accelerator 1112 shown in the example of FIG. 11. In other examples, the aggregating means is implemented by hardware logic, hardware implemented state machines, logic circuitry, and/or any other combination of hardware, software, and/or firmware.

In examples disclosed herein, each of the accelerator interface 502, the credit generator 504, the counter, the source identifier 508, the duplicator 510, and the aggregator 512 is in communication with the other elements of the credit manager 500. For example, the accelerator interface 502, the credit generator 504, the counter, the source identifier 508, the duplicator 510, and the aggregator 512 are in communication via an example communication bus 514. In some examples disclosed herein, the accelerator interface 502, the credit generator 504, the counter, the source identifier 508, the duplicator 510, and the aggregator 512 may be in communication via any suitable wired and/or wireless communication system. Additionally, in some examples disclosed herein, each of the accelerator interface 502, the credit generator 504, the counter, the source identifier 508, the duplicator 510, and the aggregator 512 may be in communication with any component exterior to the credit manager 500 via any suitable wired and/or wireless communication system.

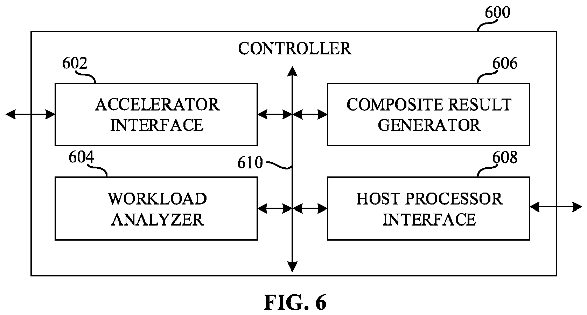

FIG. 6 is a block diagram of an example controller 600 that can implement at least one of the controllers 222 of FIG. 2 and/or the controller 324 of FIG. 3 and/or the controller 718 of FIG. 7. In the example of FIG. 6, the controller 600 includes an example accelerator interface 602, an example workload analyzer 604, an example composite result generator 606, an example host processor interface 608, and an example communication bus 610. The controller 600 is a device that directs the operation of an accelerator associated with the controller 600 (e.g., the first accelerator 210a, the accelerator 308, etc.).

In the illustrated example of FIG. 6, the accelerator interface 602 is a device that is configured to communicate with the workload analyzer 604, the composite result generator 606, the host processor interface 608, and/or devices on the accelerator with which the controller 600 is associated. For example, the accelerator interface 602 can transmit consumer CBB and/or producer CBB configuration characteristics to a credit manager (e.g., the credit manager 310, the credit manager 500, etc.) of the accelerator with which the controller 600 is associated. In some examples, accelerator interface 602 can transmit sub-sections of an executable (e.g., machine readable instructions) that has been offloaded to the accelerator with which the controller 600 is associated to one or more CBBs of the accelerator with which the controller 600 is associated.

In additional or alternative examples, the accelerator interface 602 can receive and/or otherwise obtain results of the sub-sections of the executable (e.g., machine readable instructions) that have been executed at one or more CBBs of the accelerator with which the controller 600 is associated. Moreover, the accelerator interface 602 can determine whether the controller 600 has received a last indication from the credit manager of the accelerator with which the controller 600 is associated.

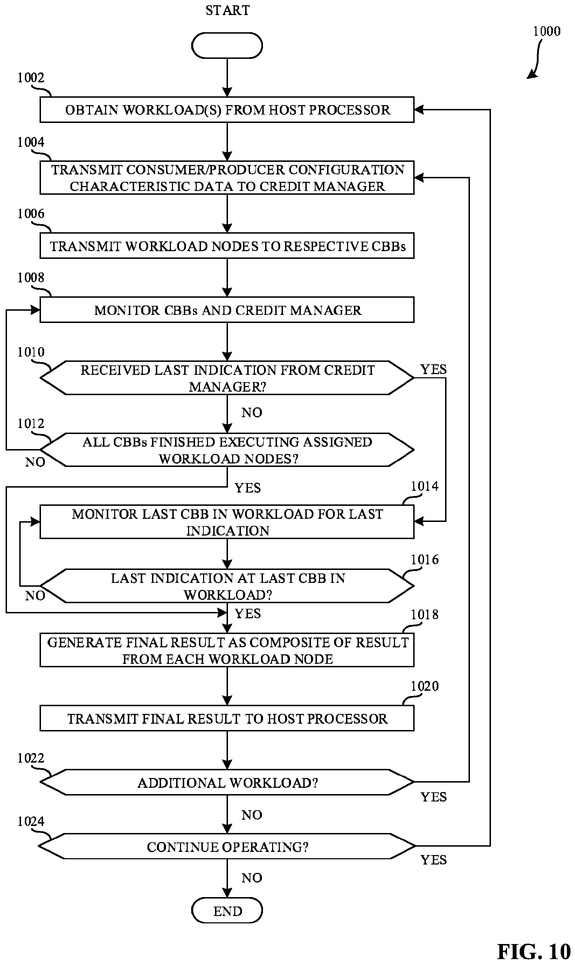

In some examples, the example accelerator interface 602 implements example means for interfacing. The interfacing means is implemented by executable instructions such as that implemented by at least blocks 1004, 1006, and 1024 of FIG. 10. For example, the executable instructions of blocks 1004, 1006, and 1024 of FIG. 10 may be executed on at least one processor such as the example processor 1110 and/or the example accelerator 1112 shown in the example of FIG. 11. In other examples, the interfacing means is implemented by hardware logic, hardware implemented state machines, logic circuitry, and/or any other combination of hardware, software, and/or firmware.

In the example illustrated in FIG. 6, the workload analyzer 604 is a device that monitors and analyzes the execution of a workload that has been assigned to the accelerator with which the controller 600 is associated. For example, the workload analyzer 604 can monitor the various CBBs of the accelerator with which the controller 600 is associated (e.g., the convolution engine 314, the MMU 316, the RNN engine 318, the DSP 320, etc.). In additional or alternative examples, the workload analyzer 604 can monitor the credit manager of the accelerator with which the controller 600 is associated (e.g., the credit manager 310, the credit manager 500, etc.).

In additional or alternative examples, the workload analyzer 604 can determine whether a last indication has been received from the credit manager of the accelerator with which the controller 600 is associated. If the workload analyzer 604 determines that the credit manager of the accelerator with which the controller 600 is associated has transmitted a last indication to the controller 600, the workload analyzer 604 monitors the CBB to which the last subs-section (e.g., the workload node, etc.) of the executable (e.g., the workload, a graph, etc.) was assigned for the last indication. If the workload analyzer 604 determines that the credit manager of the accelerator with which the controller 600 is associated has not transmitted a last indication to the controller 600, the workload analyzer 604 determines whether the CBBs to which the sub-sections of the executable were assigned have completed execution of the sub-sections (e.g., workload nodes).

In the example of FIG. 6, if the workload analyzer 604 determines that the CBBs to which the sub-sections of the executable were assigned have not completed execution of the sub-sections (e.g., workload nodes), the workload analyzer 604 continues to monitor both the CBBs to which the sub-sections of the executable have been assigned and the credit manager of the accelerator with which the controller 600 is associated. If the workload analyzer 604 determines that the CBBs to which the sub-sections of the executable were assigned have completed execution of the sub-sections (e.g., workload nodes), the workload analyzer 604 indicates to the composite result generator 606 that the executable (e.g., the workload) has completed execution of the accelerator with which the controller 600 is associated.

In the example of FIG. 6, the workload analyzer 604 can determine whether there has been a last indication at the CBB to which the last sub-section of the executable (e.g., the last workload node in the workload) was assigned. If the workload analyzer 604 determines that there has not been a last indication at the CBB to which the last sub-section of the executable was assigned, the workload analyzer 604 continues to monitor the CBB to which the last sub-section of the executable was assigned for the last indication. If the workload analyzer 604 determines that there has been a last indication at the CBB to which the last sub-section of the executable was assigned, the workload analyzer 604 indicates to the composite result generator 606 that the executable (e.g., the workload) has completed execution of the accelerator with which the controller 600 is associated.

In some examples, the example workload analyzer 604 implements example means for analyzing. The analyzing means is implemented by executable instructions such as that implemented by at least blocks 1008, 1010, 1012, 1014, and 1016 of FIG. 10. For example, the executable instructions of blocks 1008, 1010, 1012, 1014, and 1016 of FIG. 10 may be executed on at least one processor such as the example processor 1110 and/or the example accelerator 1112 shown in the example of FIG. 11. In other examples, the analyzing means is implemented by hardware logic, hardware implemented state machines, logic circuitry, and/or any other combination of hardware, software, and/or firmware.

In the illustrated example of FIG. 6, the composite result generator 606 is a device that generates a composite result of the executable that has been assigned to the accelerator with which the controller 600 is associated. For example, the composite result generator 606 can access the various results in the buffers (e.g., the buffers 328 of FIG. 3) in the memory of the accelerator with which the controller 600 is associated and combine the results of the respective CBBs to which the sub-sections of the executable were assigned.

In some examples, the example composite result generator 606 implements example means for generating. The generating means is implemented by executable instructions such as that implemented by at least block 1018 of FIG. 10. For example, the executable instructions of block 1018 of FIG. 10 may be executed on at least one processor such as the example processor 1110 and/or the example accelerator 1112 shown in the example of FIG. 11. In other examples, the generating means is implemented by hardware logic, hardware implemented state machines, logic circuitry, and/or any other combination of hardware, software, and/or firmware.

In the illustrated example of FIG. 6, the host processor interface 608 is a device that is configured to communicate with the accelerator interface 602, the workload analyzer 604, the composite result generator 606, and/or devices external to the accelerator with which the controller 600 is associated. For example, the host processor interface 608 can obtain one or more workloads from a host processor (e.g., the host processor 206, the graph compiler 302, etc.) external to the accelerator with which the controller 600 is associated. In additional examples, the host processor interface 608 transmits the composite result to the host processor (e.g., the host processor 206, the graph compiler 302, etc.) that is external to the accelerator with which the controller 600 is associated.

In additional or alternative examples, the host processor interface 608 can determine whether there is an additional workload in the one or more workloads that were retrieved and/or otherwise obtained from the host processor that is external to the accelerator with which the controller 600 is associated. If the host processor interface 608 determines that there is an additional workload, the host processor interface 608 can indicate to the accelerator interface 602 to transmit consumer CBB and producer CBB configuration characteristics for the additional workload to the credit manager of the accelerator with which the controller 600 is associated.

In some examples, the example host processor interface 608 implements example means for interfacing. The interfacing means is implemented by executable instructions such as that implemented by at least blocks 1002, 1020, and 1022 of FIG. 10. For example, the executable instructions of blocks 1002, 1020, and 1022 of FIG. 10 may be executed on at least one processor such as the example processor 1110 and/or the example accelerator 1112 shown in the example of FIG. 11. In other examples, the interfacing means is implemented by hardware logic, hardware implemented state machines, logic circuitry, and/or any other combination of hardware, software, and/or firmware.

In examples disclosed herein, each of the accelerator interface 602, the workload analyzer 604, the composite result generator 606, and the host processor interface 608 is in communication with the other elements of the controller 600. For example, the accelerator interface 602, the workload analyzer 604, the composite result generator 606, and the host processor interface 608 are in communication via an example communication bus 610. In some examples disclosed herein, the accelerator interface 602, the workload analyzer 604, the composite result generator 606, and the host processor interface 608 may be in communication via any suitable wired and/or wireless communication system. Additionally, in some examples disclosed herein, each of the accelerator interface 602, the workload analyzer 604, the composite result generator 606, and the host processor interface 608 may be in communication with any component exterior to the controller 600 via any suitable wired and/or wireless communication system.

FIG. 7 is a graphical illustration of an example graph 700 representing a workload executing on an accelerator of a heterogenous system implementing pipelining and buffers. For example, the accelerator is the first accelerator 210a and the heterogeneous system is the heterogeneous system 204 of FIG. 2. In the example of FIG. 7, an example computing system 702 generates the graph 700 to execute on the accelerator. For examples, the graph 700 may be in the form of an executable file or any other suitable machine readable instructions. In some examples, the computing system 702 can correspond to the host processor 206 of FIG. 2 while in other examples, the computing system 702 can correspond to the graph compiler 302 of FIG. 3. The example graph 700 includes an example input 704, an example first workload node 706 (WN[0]), an example second workload node 708 (WN[1]), an example third workload node 710 (WN[2]), an example fourth workload node 712 (WN[3]), an example fifth workload node 714 (WN[4]), and an example output 716. In the example of FIG. 7, an example controller 718 of the accelerator is configured to parse the executable received from the computing system 702 to determine which CBBs of the accelerator the first workload node 706 (WN[0]), the second workload node 708 (WN[1]), the third workload node 710 (WN[2]), the fourth workload node 712 (WN[3]), and the fifth workload node 714 (WN[4]) are assigned. For example, based on the executable received from the computing system 702, the controller 718 assigns the first workload node 706 (WN[0]) to an example first CBB 720, the second workload node 708 (WN[1]) to an example second CBB 722, the third workload node 710 (WN[2]) to an example third CBB 724, the fourth workload node 712 (WN[3]) to an example fourth CBB 726, and the fifth workload node 714 (WN[4]) to an example fifth CBB 728. In some examples, one or more workload nodes can be assigned to the same CBB.

In the example of FIG. 7, each of the example first CBB 720, the example second CBB 722, the example third CBB 724, the example fourth CBB 726, and the example fifth CBB 728 includes an example first scheduler 730, an example second scheduler 732, an example third scheduler 734, an example fourth scheduler 736, and an example fifth scheduler 738. Each of the first scheduler 730, the second scheduler 732, the third scheduler 734, the fourth scheduler 736, and the fifth scheduler 738 can be implemented by the scheduler 400 of FIG. 4.

In the illustrated example of FIG. 7, the first workload node 706 (WN[0]), the second workload node 708 (WN[1]), and the third workload node 710 (WN[2]) are associated with an example first buffer 740. The first buffer 740 is an output buffer of the first workload node 706 (WN[0]) and an input buffer to the second workload node 708 (WN[1]) and the third workload node 710 (WN[2]). The second workload node 708 (WN[1]) and the fourth workload node 712 (WN[3]) are associated with an example second buffer 742. The second buffer 742 is output buffer of the second workload node 708 (WN[1]) and an input buffer to the fourth workload node 712 (WN[3]). The third workload node 710 (WN[2]) and the fourth workload node 712 (WN[3]) are associated with an example third buffer 744. The third buffer 744 is output buffer of the third workload node 710 (WN[2]) and an input buffer to the fourth workload node 712 (WN[3]). The fourth workload node 712 (WN[3]) and the fifth workload node 714 (WN[4]) are associated with an example fourth buffer 746. The fourth buffer 746 is an output buffer of the fourth workload node 712 (WN[3]) and an input buffer to the fifth workload node 714 (WN[4]). Each of the first buffer 740, the second buffer 742, the third buffer 744, and the fourth buffer 746 can be implemented by a cyclic buffer. In the example of FIG. 7, each of the first buffer 740, the second buffer 742, the third buffer 744, and fourth buffer 746 includes five partitions of memory of the accelerator, each of which can store a tile of data. In other examples, the first buffer 740, the second buffer 742, the third buffer 744, and fourth buffer 746 can include any number of partitions of memory of the accelerator as defined by the computing system 702.

In the example illustrated in FIG. 7, after assigning the first workload node 706 (WN[0]), the second workload node 708 (WN[1]), the third workload node 710 (WN[2]), the fourth workload node 712 (WN[3]), and the fifth workload node 714 (WN[4]) to the first CBB 720, the second CBB 722, the third CBB 724, the fourth CBB 726, and the fifth CBB 728, respectively, the controller 718 transmits configuration characteristics (e.g., configuration information) to an example credit manager 748. Based on the configuration characteristics and because the first workload node 706 (WN[0]) is a producer workload node, the credit manager 748 initializes the first scheduler 730 with five credits for the first buffer 740. Similarly, based on the configuration characteristics and because the second workload node 708 (WN[1]) is a producer workload node, the credit manager 748 initializes the second scheduler 732 with five credits for the second buffer 742. Moreover, based on the configuration characteristics and because the third workload node 710 (WN[2]) is a producer workload node, the credit manager 748 initializes the third scheduler 734 with five credits for the third buffer 744. Additionally, based on the configuration characteristics as the fourth workload node 712 (WN[3]) is a producer workload node, the credit manager 748 initializes the fourth scheduler 736 with five credits for the fourth buffer 746.

The five credits provided to each of the first scheduler 730, the second scheduler 732, the third scheduler 734, and the fourth scheduler 736 are representative of the size of the first buffer 740, the second buffer 742, the third buffer 744, and the fourth buffer 746. Additionally, based on the configuration characteristics, the credit manager 748 identifies the second workload node 708 (WN[1]) and the third workload node 710 (WN[2]) are consumer workload nodes of the first workload node 706 (WN[0]).

In the example of FIG. 7, the third scheduler 734 determines the data dependencies of the third workload node 710 (WN[2]) and determines that the third workload node 710 (WN[2]) is a candidate for early termination. After determining that the third workload node 710 (WN[2]) is a candidate for early termination, the third scheduler 734 sets the last indication flag for the last tile that is to be executed given the determination that the third workload node 710 (WN[2]) is a candidate for early termination and dispatches the third workload node 710 (WN[2]) for execution at the third CBB 724.

In the illustrated example of FIG. 7, the configuration characteristics indicate to the credit manager 748 that the third workload node 710 (WN[2]) is to consume 1000 tiles from the first buffer 740 and produce 500 tiles for the third buffer 744 over time. As the third CBB 724 executes the third workload node 710 (WN[2]), the third CBB 724 transmits tiles from the third CBB 724 to the third buffer 744 via a data fabric (e.g., the data fabric 311 of FIG. 3). As the third CBB 724 transmits tiles to the third buffer 744, the third scheduler 734 transmits a credit to the credit manager 748 for each tile the third CBB 724 transmits to the third buffer 744. For each tile transmitted from the third CBB 724 to the third buffer 744, the third scheduler 734 additionally determines if the transmitted tile is associated with the with the last indication. If the third scheduler 734 determines that the tile transmitted from the third CBB 724 to the third buffer 744 is associated with the last indication, the third scheduler 734 sends a last indication to the credit manager 748.

In the example of FIG. 7, the credit manager 748 determines whether the last indication received from the third scheduler 734 was received prior to the predetermined completion of execution of the third workload node 710 (WN[2]) at the third CBB 724. For example, the credit manager 748 can compare the count value of a tile counter for the third workload node 710 (WN[2]) to the number of tiles that the third workload node 710 (WN[2]) is to execute as defined in the configuration characteristics. If the count value of the tile counter is less than the number of tiles that the third workload node 710 (WN[2]) is to execute as defined in the configuration characteristics, the credit manager 748 can determine that the third scheduler 734 transmitted a last indication to the credit manager 748 prior to the scheduled completion of the third workload node 710 (WN[2]) at the third CBB 724.

Because the third scheduler 734 transmitted the last indication to the credit manager 748 prior to the scheduled completion of the third workload node 710 (WN[2]), the credit manager 748 transmits the last indication to each of the n consumers of the third workload node 710 (WN[2]) (e.g., the fourth workload node 712 (WN[3])) and to the controller 718. In this manner, the last indication propagates through the graph 700 such that the remaining CBBs (e.g., the fourth CBB 726 and the fifth CBB 728) can process and/or execute the remaining workload nodes in the graph 700 on less data (e.g., up until the last indication).

Moreover, in response to detecting the last indication from the credit manager 748, the controller 718, monitors the CBB to which the last workload node in the graph 700 has been assigned (e.g., the fifth CBB 728) for the last indication. Upon detecting the last indication from the fifth scheduler 738, the controller 718 can generate a final result of the workload offloaded to the accelerator by the computing system 702 regardless of whether there has been a last indication from all of the first scheduler 730, the second scheduler 732, the third scheduler 734, the fourth scheduler 736, and the fifth scheduler 738.

For example, as the third scheduler 734 transmitted the last indication to the credit manager 748 prior to the scheduled completion of the third workload node 710 (WN[3]) at the third CBB 724, the first scheduler 730 may not transmit a last indication to the credit manager 748 indicating that the first workload node 706 (WN[0]) has not completed execution. In examples disclosed herein, because the controller 718 monitors for the last indication at the CBB to which the last workload node in the graph 700 was assigned, the controller 718 can generate a composite result of the workload and transmit the composite result to the computing system 702 without having to detect that all the CBBs to which workloads nodes were assigned have completed execution of the assigned workload nodes. In additional or alternative examples, if the graph includes multiple endpoints, the controller 718 can monitor each of the endpoints for the last indication before generating the composite result.

In the example of FIG. 7, each of the first scheduler 730, the second scheduler 732, the third scheduler 734, the fourth scheduler 736, and the fifth scheduler 738 implements the examples disclosed herein. In additional or alternative examples, the examples disclosed herein can be accomplished by at least one of the first scheduler 730, the second scheduler 732, the third scheduler 734, the fourth scheduler 736, or the fifth scheduler 738.

While an example manner of implementing the first scheduler 226, the second scheduler 228, the third scheduler 230, the fourth scheduler 232, the one or more controllers 222 of FIG. 3, and/or the credit manager 310, the controller 324, the scheduler 338, the scheduler 340, the scheduler 342, the scheduler 344 of FIG. 3, and/or the first scheduler 730, the second scheduler 732, the third scheduler 734, the fourth scheduler 736, and/or the fifth scheduler 738 of FIG. 7 is illustrated in FIGS. 4, 5 and 6, one or more of the elements, processes and/or devices illustrated in FIGS. 4, 5, and 6 may be combined, divided, re-arranged, omitted, eliminated and/or implemented in any other way. Further, the example workload interface 402, the example buffer credit storage 404, the example credit analyzer 406, the example workload node dispatcher 408, and/or, more generally, the example scheduler 400 of FIG. 4, and/or the example accelerator interface 502, the example credit generator 504, the example counter 506, the example source identifier 508, the example duplicator 510, the example aggregator 512, and/or, more generally, the example credit manager 500 of FIG. 5, and/or the example accelerator interface 602, the example workload analyzer 604, the example composite result generator 606, the example host processor interface 608, and/or, more generally, the controller 600 of FIG. 6 may be implemented by hardware, software, firmware and/or any combination of hardware, software and/or firmware. Thus, for example, any of the example workload interface 402, the example buffer credit storage 404, the example credit analyzer 406, the example workload node dispatcher 408, and/or, more generally, the example scheduler 400 of FIG. 4, and/or the example accelerator interface 502, the example credit generator 504, the example counter 506, the example source identifier 508, the example duplicator 510, the example aggregator 512, and/or, more generally, the example credit manager 500 of FIG. 5, and/or the example accelerator interface 602, the example workload analyzer 604, the example composite result generator 606, the example host processor interface 608, and/or, more generally, the controller 600 of FIG. 6 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)).

When reading any of the apparatus or system claims of this patent to cover a purely software and/or firmware implementation, at least one of the example workload interface 402, the example buffer credit storage 404, the example credit analyzer 406, the example workload node dispatcher 408, and/or, more generally, the example scheduler 400 of FIG. 4, and/or the example accelerator interface 502, the example credit generator 504, the example counter 506, the example source identifier 508, the example duplicator 510, the example aggregator 512, and/or, more generally, the example credit manager 500 of FIG. 5, and/or the example accelerator interface 602, the example workload analyzer 604, the example composite result generator 606, the example host processor interface 608, and/or, more generally, the controller 600 of FIG. 6 is/are hereby expressly defined to include a non-transitory computer readable storage device or storage disk such as a memory, a digital versatile disk (DVD), a compact disk (CD), a Blu-ray disk, etc. including the software and/or firmware. Further still, the example scheduler 400 of FIG. 4, the example credit manager 500 of FIG. 5, and/or the controller 600 of FIG. 6 may include one or more elements, processes and/or devices in addition to, or instead of, those illustrated in FIG. 4, FIG. 5, and/or FIG. 6, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

Flowchart representative of example hardware logic, machine readable instructions, hardware implemented state machines, and/or any combination thereof for implementing the example scheduler 400 of FIG. 4, the example credit manager 500 of FIG. 5, and/or the controller 600 of FIG. 6 are shown in FIGS. 8, 9 and 10, respectively. The machine readable instructions may be one or more executable programs or portion(s) of an executable program for execution by a computer processor such as the processor 1110 and/or the accelerator 1112 shown in the example processor platform 1100 discussed below in connection with FIG. 11. The program may be embodied in software stored on a non-transitory computer readable storage medium such as a CD-ROM, a floppy disk, a hard drive, a DVD, a Blu-ray disk, or a memory associated with the processor 1110 and/or the accelerator 1112, but the entire program and/or parts thereof could alternatively be executed by a device other than the processor 1110 and/or the accelerator 1112 and/or embodied in firmware or dedicated hardware. Further, although the example program is described with reference to the flowcharts illustrated in FIGS. 8, 9, and 10, many other methods of implementing the example scheduler 400 of FIG. 4, the example credit manager 500 of FIG. 5, and the controller 600 of FIG. 6, respectively, may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (opamp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 8, 9, and 10 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 8 is a flowchart representative of a process 800 which can be implemented by machine readable instructions which may be executed to implement the scheduler of FIG. 4. The process 800 begins at block 802 when the workload interface 402 loads one or more workload nodes assigned to the CBB with which the scheduler 400 is associated. At block 804, the credit analyzer 406 selects a workload node assigned to the CBB with which the scheduler 400 is associated according to a schedule received from a credit manager (e.g., the credit manager 500) and/or a controller (e.g., the controller 600).

In the example of FIG. 8, at block 806, the credit analyzer 406 determines whether the scheduler 400 has received credits for the selected workload node. If the credit analyzer 406 determines that the scheduler 400 has not received credits for the selected workload node (block 806: NO), the process 800 proceeds to block 806.

In the example illustrated in FIG. 8, if the credit analyzer 406 determines that the scheduler 400 has received credits for the selected workload node (block 806: YES), the credit analyzer 406 determines whether the credits for the selected workload node include a last indication at block 808. If the credit analyzer 406 determines that the credits for the selected workload node include a last indication (block 808: YES), the process 800 proceeds to block 814. If the credit analyzer 406 determines that the credits for the selected workload node do not include a last indication (block 808: NO), the credit analyzer 406 determines the data dependencies of the selected workload node at block 810.

In the example of FIG. 8, at block 812, the credit analyzer 406 determines whether the selected workload node is a candidate for early termination. For example, based on the data dependencies of the selected workload node, the credit analyzer 406 can determine whether the selected workload node is a candidate for early termination. If the credit analyzer 406 determines that the selected workload node is a candidate for early termination (block 812: YES), the credit analyzer 406 sets the last indication flag for the last tile in the workload node to be executed at block 814. If the credit analyzer 406 determines that the selected workload node is not a candidate for early termination (block 812: NO), the process 800 proceeds to block 816.

In the illustrated example of FIG. 8, at block 816, the workload node dispatcher 408 dispatches the selected workload node to the CBB with which the scheduler 400 is associated. At block 818, the workload interface 402 determines whether the CBB with which the scheduler 400 is associated has transmitted a tile to a buffer associated with the selected workload node. If the workload interface 402 determines that the CBB with which the scheduler 400 is associated has not transmitted a tile to the buffer associated with the selected workload node (block 818: NO), the process 800 proceeds to block 818. If the workload interface 402 determines that the CBB with which the scheduler 400 is associated has transmitted a tile to the buffer associated with the selected workload node (block 818: YES), the workload interface 402 transmits a credit to a credit manager (e.g., the credit manager 500) at block 820.

In the example of FIG. 8, at block 822, the workload interface 402 determines whether the transmitted tile is associated with the last indication. If the workload interface 402 determines that the transmitted tile is associated with the last indication (block 822: YES), the process 800 proceeds to block 826. If the workload interface 402 determines that the transmitted tile is not associated with the last indication (block 822: NO), the workload interface 402 determines whether there are additional credits for the selected workload node at block 824. If the workload interface 402 determines that there are additional credits for the selected workload node (block 824: YES), the process 800 proceeds to block 818. If the workload interface 402 determines that there are not additional credits for the selected workload node (block 824: NO), the workload interface 402 transmits the last indication to the credit manager at block 826.

In the example of FIG. 8, at block 828, the workload node dispatcher 408 stops the execution of the selected workload node at the CBB with which the scheduler 400 is associated. At block 830, the workload node dispatcher 408 determines if there is an additional workload node to be executed. If the workload node dispatcher 408 determines that there is an additional workload node to be executed (block 830: YES), the process 800 proceeds to block 804. If the workload node dispatcher 408 determines that there is not an additional workload node to be executed (block 830: NO), the process 800 proceeds to block 832.

In the example of FIG. 8, at block 832, the workload interface 402 determines whether to continue operating. For example, a condition that would cause the workload interface 402 to determine to continue operating includes receiving additional workload nodes from a controller (e.g., the controller 600). If the workload interface 402 determines to continue operating (block 832: YES), the process 800 proceeds to block 802. If the workload interface 402 determines not to continue operating (block 832: NO), the process 800 terminates.

FIG. 9 is a flowchart representative of a process 900 which can be implemented by machine readable instructions which may be executed to implement the credit manager 500 of FIG. 5. The process 900 begins at block 902 when the accelerator interface 502 receives configuration characteristics from a controller (e.g., the controller 600). At block 904, the counter 506 initializes the slot credits counter to zero. At block 906, the credit generator 504 generates credits according to the buffer characteristic information transmitted from the accelerator interface 502.

In the example of FIG. 9, at block 908, in response to the credit generator 504 generating credits, the accelerator interface 502 packages the credits and sends the credits to CBBs associated with producer workload nodes. At block 910, the accelerator interface 502 determines whether the credit manager 500 has received a returned credit. For example, when a CBB associated with a producing workload node writes to a slot in a buffer, a credit corresponding to that slot is returned to the credit manager 500. If the accelerator interface 502 determines that the credit manager 500 has not received a returned credit (block 910: NO), the process 900 proceeds to block 938. If the accelerator interface 502 determines that the credit manager 500 has received a returned credit (block 910: YES), the accelerator interface 502 determines whether the credit manager 500 received a last indication prior to the scheduled completion of the workload node associated with the returned credit at block 912.

In the example of FIG. 9, if the accelerator interface 502 determines that the credit manager 500 has not received a last indication prior to the scheduled completion of the workload node associated with the returned credit (block 912: NO), the process 900 proceeds to block 916. if the accelerator interface 502 determines that the credit manager 500 has received a last indication prior to the scheduled completion of the workload node associated with the returned credit (block 912: YES), the accelerator interface 502 sets the last indication flag at block 914.

In the illustrated example of FIG. 9, at block 916, the source identifier 508 determines whether the source of the returned credit is a CBB associated with a producer workload node (e.g., a producer CBB). If the source identifier 508 determines that the source of the returned credit is not a CBB associated with a producer workload node (block 916: NO), the process 900 proceeds to block 928. If the source identifier 508 determines that the source of the returned credit is a CBB associated with a producer workload node (block 916: YES), the duplicator 510 determines n number of consumers based on the received configuration characteristics from a controller (e.g., the controller 600) at block 918.

In the example of FIG. 9, at block 920, the accelerator interface 502 send a consumer credit to n consumers. At block 922, the accelerator interface 502 determines whether the last indication flag is set. If the accelerator interface 502 determines that the last indication flag is not set (block 922: NO), the process 900 proceeds to block 910. If the accelerator interface 502 determines that the last indication flag is set (block 922: YES), the process 900 proceeds to block 924 where the accelerator interface 502 transmits the last indication to each n consumer. At block 926, the accelerator interface 502 transmits the last indication to the controller of the accelerator with which the credit manager 500 is associated (e.g., the controller 600).

In the example of FIG. 9, at block 928, the counter 506 increments a slot credits counter assigned to the slot that the CBBs associated with the consumer workload nodes (e.g., consumer CBBs) of the producer workload node read a tile of data from. For example, the counter 506 keeps track of the consumer credits in order to determine when to initialize the aggregator 512 to combine consumer credits. In this case, the counter 506 increments a slot credits counter corresponding to a number of credits received by the credit manager 500 from one or more consumers CBBs corresponding to a specific slot in a buffer.

In the illustrated example of FIG. 9, at block 930, the aggregator 512 determine if the slot credits counter is greater than zero (block 620). If aggregator 512 determines that the slot credits counter is not greater than zero (block 930: NO), the process 900 proceeds to block 910. If the aggregator 512 determines that the slot credits counter is greater than zero (block 930: YES), the aggregator 512 aggregates the multiple consumer credits into a single producer credit at block 932.

In response to the aggregator 512 combining consumer credits, the accelerator interface 502 packages the credit and send the credit to the producer CBB at block 934. In response to the accelerator interface 502 sending a credit to the producer CBB, the counter 506 decrements the slot credits counter at block 936. After block 936, the process 900 proceeds to block 902.

In the example of FIG. 9, at block 938, in response to determining that the credit manager 500 has not received a returned credit after a threshold amount of time, the accelerator interface 502 determines whether there are additional credits at producer CBBs that are unused. If the accelerator interface 502 determines that there are not additional credits at producer CBBs that are unused (block 938: NO) the process 900 proceeds to block 910. If the accelerator interface 502 determines that there are additional credits at producer CBBs that are unused (block 938: YES) the credit generator 504 zeros the producer credits at block 940 by removing the unused credits from the producer CBBs.

In the example of FIG. 9, at block 942, the accelerator interface 502 determines whether to continue operating. For example, a condition that would cause the accelerator interface 502 to determine to continue operating includes receiving additional configuration characteristics from a controller (e.g., the controller 600). If the accelerator interface 502 determines to continue operating (block 942: YES), the process 900 proceeds to block 902. If the accelerator interface 502 determines not to continue operating (block 942: NO), the process 900 terminates.

FIG. 10 is a flowchart representative of a process 1000 which can be implemented by machine readable instructions which may be executed to implement the controller 600 of FIG. 6. The process 1000 begins at block 1002 when the host processor interface 608 obtains one or more workloads from a host processor (e.g., the host processor 206, the graph compiler 302, the computing system 702, etc.). At block 1004, the accelerator interface 602 transmits consumer CBB and/or producer CBB configuration characteristics to a credit manager (e.g., the credit manager 500) of the accelerator with which the controller 600 is associated. At block 1006, the accelerator interface 602 transmits workload nodes (e.g., the sub-sections of an executable) to one or more CBBs of the accelerator with which the controller 600 is associated.

In the example illustrated in FIG. 10, at block 1008, the workload analyzer 604 monitors the various CBBs and the credit manager (e.g., the credit manager 500) of the accelerator with which the controller 600 is associated. At block 1010, the workload analyzer 604 determines whether a last indication has been received from the credit manager of the accelerator with which the controller 600 is associated. If the workload analyzer 604 determines that the credit manager of the accelerator with which the controller 600 is associated has transmitted a last indication to the controller 600 (block 1010: YES), the process 1000 proceeds to block 1014. If the workload analyzer 604 determines that the credit manager of the accelerator with which the controller 600 is associated has not transmitted a last indication to the controller 600 (block 1010: NO), the workload analyzer 604 determines whether the CBBs to which the sub-sections of the executable were assigned have completed execution of the workload nodes at block 1012.

In the example of FIG. 10, if the workload analyzer 604 determines that the CBBs to which the workload nodes of the executable were assigned have not completed execution of the workload nodes (block 1012: NO), the process 1000 proceeds to block 1008. If the workload analyzer 604 determines that the CBBs to which the workload nodes of the executable were assigned have completed execution of the workload nodes (block 1012: YES), the process 1000 proceeds to block 1018.

In the example of FIG. 10, at block 1014, the workload analyzer 604 monitors the CBB to which the last workload node of the executable (e.g., the workload, a graph, etc.) was assigned for the last indication. At block 1016, the workload analyzer 604 determines whether there has been a last indication at the CBB to which the last workload node of the executable (e.g., the last workload node in the workload) was assigned. If the workload analyzer 604 determines that there has not been a last indication at the CBB to which the last workload node of the executable was assigned (block 1016: NO), the process 1000 proceeds to block 1014. If the workload analyzer 604 determines that there has been a last indication at the CBB to which the last workload node of the executable was assigned (block 1016: YES), the process 1000 proceeds to block 1018.

In the illustrated example of FIG. 10, at block 1018, the composite result generator 606 generates a final result of the executable as a composite result of the results from the various CBBs of the accelerator with which the controller 600 is associated. At block 1020, the host processor interface 608 transmits the final result to the host processor (e.g., the host processor 206, the graph compiler 302, the computing system 702, etc.) that is external to the accelerator with which the controller 600 is associated.

In the example of FIG. 10, at block 1022, the host processor interface 608 determines whether there is an additional workload in the one or more workloads that were retrieved and/or otherwise obtained from the host processor that is external to the accelerator with which the controller 600 is associated. If the host processor interface 608 determines that there is an additional workload (block 1022: YES), the process 1000 proceeds to block 1004. If the host processor interface 608 determines that there is not an additional workload (block 1022: NO), the process 1000 proceeds to block 1024.

In the example of FIG. 10, at block 1024, the accelerator interface 602 determines whether to continue operating. For example, a condition that would cause the accelerator interface 602 to determine to continue operating includes receiving additional executables from the device that is external to the accelerator with which the controller 600 is associated. If the accelerator interface 602 determines to continue operating (block 1024: YES), the process 1000 proceeds to block 1002. If the accelerator interface 602 determines not to continue operating (block 1024: NO), the process 1000 terminates.

FIG. 11 is a block diagram of an example processor platform 1100 structured to execute the instructions of FIGS. 8, 9, and 10 to implement one or more instantiations of the scheduler 400 of FIG. 4, the credit manager 500 of FIG. 5, and/or the controller 600 of FIG. 6. The processor platform 1100 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 1100 of the illustrated example includes a processor 1110 and an accelerator 1112. The processor 1110 of the illustrated example is hardware. For example, the processor 1110 can be implemented by one or more integrated circuits, logic circuits, microprocessors, GPUs, DSPs, or controllers from any desired family or manufacturer. The hardware processor may be a semiconductor based (e.g., silicon based) device. Additionally, the accelerator 1112 can be implemented by, for example, one or more integrated circuits, logic circuits, microprocessors, GPUs, DSPs, FPGAs, VPUs, controllers, and/or other CBBs from any desired family or manufacturer. The accelerator 1112 of the illustrated example is hardware. The hardware accelerator may be a semiconductor based (e.g., silicon based) device. In this example, the accelerator 1112 implements the example credit manager 310, the example convolution engine 314, the example MMU 316, the example RNN engine 318, the example DSP 320, the example memory 322, and the example controller 324. The example memory 322 includes the example DMA unit 326 and the example one or more buffers 328.

Moreover, each of the example convolution engine 314, the example MMU 316, the example RNN engine 318, and the example DSP 320 includes the example first scheduler 338, the example second scheduler 340, the example third scheduler 342, and the example fourth scheduler 344, respectively. In the example of FIG. 9, each of the example first scheduler 338, the example second scheduler 340, the example third scheduler 342, and the example fourth scheduler 344 includes the example workload interface 402, the example buffer credit storage 404, the example credit analyzer 406, the example workload node dispatcher 408, and/or, more generally, the scheduler 400.

In the example of FIG. 11, the example credit manager 310 includes the example accelerator interface 502, the example credit generator 504, the example counter 506, the example source identifier 508, the example duplicator 510, the example aggregator 512, and/or, more generally, the credit manager 500. Additionally, the example controller 324 includes the example accelerator interface 602, the example workload analyzer 604, the example composite result generator 606, the example host processor interface 608, and/or, more generally, the example controller 600.

In the example of FIG. 11, the processor 1110 implements the example graph compiler 302 and the example one or more selectors 304. In additional or alternative examples, the processor 1110, the example credit manager 310, the example convolution engine 314, the example MMU 316, the example RNN engine 318, the example DSP 320, the example memory 322, and the example controller 324. The example memory 322 includes the example DMA unit 326 and the example one or more buffers 328.

Moreover, each of the example convolution engine 314, the example MMU 316, the example RNN engine 318, and the example DSP 320 includes the example first scheduler 338, the example second scheduler 340, the example third scheduler 342, and the example fourth scheduler 344, respectively. In the example of FIG. 9, each of the example first scheduler 338, the example second scheduler 340, the example third scheduler 342, and the example fourth scheduler 344 includes the example workload interface 402, the example buffer credit storage 404, the example credit analyzer 406, the example workload node dispatcher 408, and/or, more generally, the scheduler 400.

In the example of FIG. 11, the example credit manager 310 includes the example accelerator interface 502, the example credit generator 504, the example counter 506, the example source identifier 508, the example duplicator 510, the example aggregator 512, and/or, more generally, the credit manager 500. Additionally, the example controller 324 includes the example accelerator interface 602, the example workload analyzer 604, the example composite result generator 606, the example host processor interface 608, and/or, more generally, the example controller 600.

The processor 1110 of the illustrated example includes a local memory 1111 (e.g., a cache). The processor 1110 of the illustrated example is in communication with a main memory including a volatile memory 1114 and a non-volatile memory 1116 via a bus 1118. Moreover, the accelerator 1112 of the illustrated example includes a local memory 1113 (e.g., a cache). The accelerator 1112 of the illustrated example is in communication with a main memory including the volatile memory 1114 and the non-volatile memory 1116 via the bus 1118. The volatile memory 1114 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 1116 may be implemented by flash memory and/or any other desired type of memory device. Access to the main memory 1114, 1116 is controlled by a memory controller.

The processor platform 1100 of the illustrated example also includes an interface circuit 1120. The interface circuit 1120 may be implemented by any type of interface standard, such as an Ethernet interface, a universal serial bus (USB), a Bluetooth® interface, a near field communication (NFC) interface, and/or a PCI express interface.

In the illustrated example, one or more input devices 1122 are connected to the interface circuit 1120. The input device(s) 1122 permit(s) a user to enter data and/or commands into the processor 1110 and/or the accelerator 1112. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1124 are also connected to the interface circuit 1120 of the illustrated example. The output devices 1124 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1120 of the illustrated example, thus, typically includes a graphics driver card, a graphics driver chip and/or a graphics driver processor.

The interface circuit 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1126. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1100 of the illustrated example also includes one or more mass storage devices 1128 for storing software and/or data. Examples of such mass storage devices 1128 include floppy disk drives, hard drive disks, compact disk drives, Blu-ray disk drives, redundant array of independent disks (RAID) systems, and digital versatile disk (DVD) drives.

The machine executable instructions 1132 of FIGS. 8, 9, and 10 may be stored in the mass storage device 1128, in the volatile memory 1114, in the non-volatile memory 1116, and/or on a removable non-transitory computer readable storage medium such as a CD or DVD

From the foregoing, it will be appreciated that example methods, apparatus and articles of manufacture have been disclosed that enable dynamic processing of a predefined workload. Moreover, the example methods, apparatus and articles of manufacture have been disclosed that allow a computational building block to determine when a workload node is a candidate for early termination, thereby dynamically processing the predefined workload node. Additionally, the examples disclosed herein allow for a controller of an accelerator to completely execute a workload (e.g., an executable) without having to wait for each computational building block of the accelerator to complete execution. The disclosed methods, apparatus and articles of manufacture improve the efficiency of using a computing device by decreasing the latency of a processing workloads on a processing device. Moreover, the example methods, apparatus and articles of manufacture as disclosed herein reduce the number of computational cycles utilized by a processing device in order to process and/or otherwise execute a workload. The disclosed methods, apparatus, and articles of manufacture further decrease the power consumption of a computational device. The disclosed methods, apparatus and articles of manufacture are accordingly directed to one or more improvement(s) in the functioning of a computer.

Example methods, apparatus, systems, and articles of manufacture to enable dynamic processing of a predefined workload are disclosed herein. Further examples and combinations thereof include the following: Example 1 includes an apparatus to enable dynamic processing of a predefined workload at one or more computational building blocks of an accelerator, the apparatus comprising an interface to obtain a workload node from a controller of the accelerator, the workload node associated with a first amount of data, the workload node to be executed at a first one of the one or more computational building blocks, an analyzer to determine whether the workload node is a candidate for early termination, and in response to determining that the workload node is a candidate for early termination, set a flag associated with a tile of the first amount of data, and a dispatcher to, in response to the tile being transmitted from the first one of the one or more computational building blocks to a buffer, stop execution of the workload node at the first one of the one or more computational building blocks.

Example 2 includes the apparatus of example 1, wherein the analyzer is to determine whether the workload node is a candidate for early termination based on data dependencies of the workload node.

Example 3 includes the apparatus of example 1, wherein the interface is to transmit the flag to a credit manager of the accelerator.

Example 4 includes the apparatus of example 1, wherein the tile of the first amount of data is associated with a second amount of data in the workload node that is different than the first amount of data.

Example 5 includes the apparatus of example 1, wherein the interface is to determine whether the tile has been transmitted to the buffer.

Example 6 includes the apparatus of example 1, wherein early termination corresponds to stopping execution of the workload node after a second amount of data has been processed at the first one of the one or more computational building blocks, the second amount of data different than the first amount of data.

Example 7 includes the apparatus of example 1, wherein the interface is to determine whether credits received from a credit manager of the accelerator include the flag, and in response to the credits including the flag, set the flag.

Example 8 includes a non-transitory computer readable storage medium comprising instructions which, when executed, cause at least one processor to at least obtain a workload node from a controller of the accelerator, the workload node associated with a first amount of data, the workload node to be executed at a first one of the one or more computational building blocks, determine whether the workload node is a candidate for early termination, in response to determining that the workload node is a candidate for early termination, set a flag associated with a tile of the first amount of data, and in response to the tile being transmitted from the first one of the one or more computational building blocks to a buffer, stop execution of the workload node at the first one of the one or more computational building blocks.

Example 9 includes the non-transitory computer readable storage medium of example 8, wherein the instructions, when executed, cause the at least one processor to determine whether the workload node is a candidate for early termination based on data dependencies of the workload node.

Example 10 includes the non-transitory computer readable storage medium of example 8, wherein the instructions, when executed, cause the at least one processor to, transmit the flag to a credit manager of the accelerator.

Example 11 includes the non-transitory computer readable storage medium of example 8, wherein the tile of the first amount of data is associated with a second amount of data in the workload node that is different than the first amount of data.

Example 12 includes the non-transitory computer readable storage medium of example 8, wherein the instructions, when executed, cause the at least one processor to determine whether the tile has been transmitted to the buffer.

Example 13 includes the non-transitory computer readable storage medium of example 8, wherein early termination corresponds to stopping execution of the workload node after a second amount of data has been processed at the first one of the one or more computational building blocks, the second amount of data different than the first amount of data.

Example 14 includes the non-transitory computer readable storage medium of example 8, wherein the instructions, when executed, cause the at least one processor to determine whether credits received from a credit manager of the accelerator include the flag, and in response to the credits including the flag, set the flag.

Example 15 includes an apparatus to enable dynamic processing of a predefined workload at one or more computational building blocks of an accelerator, the apparatus comprising means for interfacing, the means for interfacing to obtain a workload node from a controller of the accelerator, the workload node associated with a first amount of data, the workload node to be executed at a first one of the one or more computational building blocks, means for analyzing, the means for analyzing to determine whether the workload node is a candidate for early termination, and in response to determining that the workload node is a candidate for early termination, set a flag associated with a tile of the first amount of data, and means for dispatching, the means for dispatching to, in response to the tile being transmitted from the first one of the one or more computational building blocks to a buffer, stop execution of the workload node at the first one of the one or more computational building blocks.

Example 16 includes the apparatus of example 15, wherein the means for analyzing are to determine whether the workload node is a candidate for early termination based on data dependencies of the workload node.

Example 17 includes the apparatus of example 15, wherein the means for interfacing are to transmit the flag to a credit manager of the accelerator.

Example 18 includes the apparatus of example 15, wherein the tile of the first amount of data is associated with a second amount of data in the workload node that is different than the first amount of data.

Example 19 includes the apparatus of example 15, wherein the means for interfacing are to determine whether the tile has been transmitted to the buffer.

Example 20 includes the apparatus of example 15, wherein early termination corresponds to stopping execution of the workload node after a second amount of data has been processed at the first one of the one or more computational building blocks, the second amount of data different than the first amount of data.

Example 21 includes the apparatus of example 15, wherein the means for interfacing are to determine whether credits received from a credit manager of the accelerator include the flag, and in response to the credits including the flag, set the flag.

Example 22 includes a method to enable dynamic processing of a predefined workload at one or more computational building blocks of an accelerator, the method comprising obtaining a workload node from a controller of the accelerator, the workload node associated with a first amount of data, the workload node to be executed at a first one of the one or more computational building blocks, determining whether the workload node is a candidate for early termination, in response to determining that the workload node is a candidate for early termination, setting a flag associated with a tile of the first amount of data, and in response to the tile being transmitted from the first one of the one or more computational building blocks to a buffer, stopping execution of the workload node at the first one of the one or more computational building blocks.

Example 23 includes the method of example 22, wherein determining whether the workload node is a candidate for early termination is based on data dependencies of the workload node.

Example 24 includes the method of example 22, further including transmitting the flag to a credit manager of the accelerator.

Example 25 includes the method of example 22, wherein the tile of the first amount of data is associated with a second amount of data in the workload node that is different than the first amount of data.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus comprising:
means for interfacing, the means for interfacing to obtain a workload node from a controller of an accelerator, the workload node associated with a first amount of data, the workload node to be executed at a first one of the one or more computational building blocks;
means for analyzing, the means for analyzing to:
determine whether the workload node is a candidate for early termination; and
in response to determining that the workload node is a candidate for early termination, set a flag associated with a tile of the first amount of data; and
means for dispatching, the means for dispatching to, in response to the tile being transmitted from the first one of the one or more computational building blocks to a buffer, stop execution of the workload node at the first one of the one or more computational building blocks.

2. The apparatus of claim 1, wherein the means for analyzing are to determine whether the workload node is a candidate for early termination based on data dependencies of the workload node.

3. The apparatus of any of claims 1-2, wherein the means for interfacing are to transmit the flag to a credit manager of the accelerator.

4. The apparatus of any of claims 1-3, wherein the tile of the first amount of data is associated with a second amount of data in the workload node that is different than the first amount of data.

5. The apparatus of any of claims 1-4, wherein the means for interfacing are to determine whether the tile has been transmitted to the buffer.

6. The apparatus of any of claims 1-5, wherein early termination corresponds to stopping execution of the workload node after a second amount of data has been processed at the first one of the one or more computational building blocks, the second amount of data different than the first amount of data.

7. The apparatus of any of claims 1-6, wherein the means for interfacing are to:
determine whether credits received from a credit manager of the accelerator include the flag; and
in response to the credits including the flag, set the flag.

8. A method comprising:
obtaining a workload node from a controller of an accelerator, the workload node associated with a first amount of data, the workload node to be executed at a first one of the one or more computational building blocks;
determining whether the workload node is a candidate for early termination;
in response to determining that the workload node is a candidate for early termination, setting a flag associated with a tile of the first amount of data; and
in response to the tile being transmitted from the first one of the one or more computational building blocks to a buffer, stopping execution of the workload node at the first one of the one or more computational building blocks.

9. The method of claim 8, wherein determining whether the workload node is a candidate for early termination is based on data dependencies of the workload node.

10. The method of any of claims 8-9, further including transmitting the flag to a credit manager of the accelerator.

11. The method of any of claims 8-10, wherein the tile of the first amount of data is associated with a second amount of data in the workload node that is different than the first amount of data.

12. The method of any of claims 8-11, further including determining whether the tile has been transmitted to the buffer.

13. The method of any of claims 8-12, wherein early termination corresponds to stopping execution of the workload node after a second amount of data has been processed at the first one of the one or more computational building blocks, the second amount of data different than the first amount of data.

14. The method of any of claims 8-13, further including:
determining whether credits received from a credit manager of the accelerator include the flag; and
in response to the credits including the flag, setting the flag.

15. A computer readable storage medium comprising instructions which, when executed, cause at least one processor to at least implement the method as claimed in claims 8-14.
